# EUROPEAN PATENT APPLICATION

(11) **EP 4 445 733 A1**
(43) Date of publication of application: **16.10.2024**
(21) Application number: 23305562.3
(22) Date of filing: 13.04.2023
(51) Int. Cl.: A01N 45/00, A01N 49/00, A01P 21/00, A01N 25/02, A01N 25/04, A01N 25/30

(54) **A METHOD FOR SAVING THE WATER USED IN IRRIGATION OF A FIELD-CULTIVATED CROP EXPOSED TO AT LEAST ONE ABIOTIC STRESS**

(71) Applicant: Elicit Plant, 16220 Moulins-sur-Tardoire (FR)
(72) Inventor: MOLIN, Aymeric, 16220 MOULINS-SUR-TARDOIRE (FR); LAGEYRE, Jérôme, 16220 MOULINS-SUR-TARDOIRE (FR)
(74) Representative: Cabinet Laurent & Charras

(57) **Abstract**

The present invention concerns a method for preserving yield while reducing the water used in anthropogenic irrigation of a field-cultivated crop exposed to at least one abiotic stress comprising the step of:
a) applying to the field-cultivated crop, at an early stage of its growth and prior to exposure of said cultivated crop to said abiotic stress, a composition comprising at least one phytosterol and at least one surfactant;
b) irrigating the field during the time the field-cultivated crop is exposed to said abiotic stress with a reduced amount of water compared to the amount of water used in a normal irrigation condition for an untreated crop.

## Description

### FIELD OF THE INVENTION

The invention relates to agriculture and farmland hydraulic engineering. In particular it relates to a method for preserving yield while reducing the water used in anthropogenic irrigation of a field-cultivated crop exposed to at least one abiotic stress. Hence, the invention involves a phytosterol-based composition, its method of manufacture, a slurry comprising the said diluted composition, particularly in a method for preserving yield while reducing the water used in anthropogenic irrigation to a crop cultivated under stress conditions.

### STATE OF THE ART

Plants, i.e., crop plants and ornamental plants, are subjected to various forms of stress. In particular, plants are constantly exposed to their environment and cannot escape abiotic stress factors (high temperature, drought, cold, frost, salinity, etc.). At the same time, they are also exposed to biotic stress factors, i.e., stresses resulting from the harmful action of a living or bioaggressive organism (viruses, fungi, bacteria, insects, pests, etc.) and more generally of a plant pathogen.

In general, these abiotic and biotic stresses cause morphological, physiological, biochemical and molecular changes in plants, resulting in a decrease in the per-hectare crop yield, i.e., a decrease in the production and/or the quality of dry matter.

In other words, a cultivated plant, for example a field-grown plant, is subjected to various forms of abiotic stress, which, among other effects, can provoke a decrease in the production of dry matter by the plant compared to a plant cultivated under optimal conditions (controlled conditions with regard to water supply, daylight/nighttime period, absence of exposure to abiotic stress, etc.).

It is also admitted that during the plant's lifetime, the said plant will be subjected to not only one stress, but multiple stresses occurring either at the same time or independently.

As early as the beginning of agricultural practice, the farmer has understood that a crop needs water to grow. In the case where naturally occurring water is not sufficient (e.g., rainfalls), then the farmer has to supply water by different means, notably by irrigation. This has led agriculture to become the worldwide consumer of water sampling, and the fraction of irrigated vs. non-irrigated fields is still increasing. On the other side, climate change opposes itself as more constraining due to the ever-growing need of water in some parts of the world which are exposed to more frequent and intensive periods of high-temperature and/or drought stresses. As these stresses are known, notably, to reduce the harvest yields of crops which have been exposed to, it seems unlikely that the future agricultural practice may be able to feed an ever-growing world population due to the lack of available water.

It appears from the above that it remains a need to adapt to climate change consequences while preserving water resources, especially fresh or human-occurring water (anthropic water) and preserving dry matter production and/or yield of a cultivated crop/plant exposed to at least one abiotic stress and possibly multiple stress conditions including thermal and drought stresses.

### DISCLOSURE OF THE INVENTION

### Definitions

As used therein, the expression "abiotic stress" refers to a non-living stimulus on living vegetal organisms, for instance a climate hazard on a crop.

As used therein, the expressions "thermal stress" and "high-temperature stress" can be used indifferently and refer to an external phenomenon where the plant is facing extensive heat corresponding to an air temperature above the air temperature of vulnerability of the crop, whereas the supply of water is granted in an amount which is sufficient for the plant to grow normally if such high-temperature stress would not occur. The skilled artisan knows that this air temperature of vulnerability of the crop is a variety-dependent value. For example, plants having a photosynthesis in C3 have an air temperature stress around 28 °C (corn, wheat, sunflower, rapeseed, etc.), and plants having a photosynthesis in C4 have an air temperature stress around 35 °C (maize, sorghum, etc.). As used therein, the thermal stress does not correspond to low-temperature stress.

As used therein, the expression drought stress refers to an external phenomenon where the plant is lacking supply of water in an amount which would be sufficient for the plant to grow normally if such drought stress would not occur. Such a drought stress occurs with or without conditions of a thermal stress.

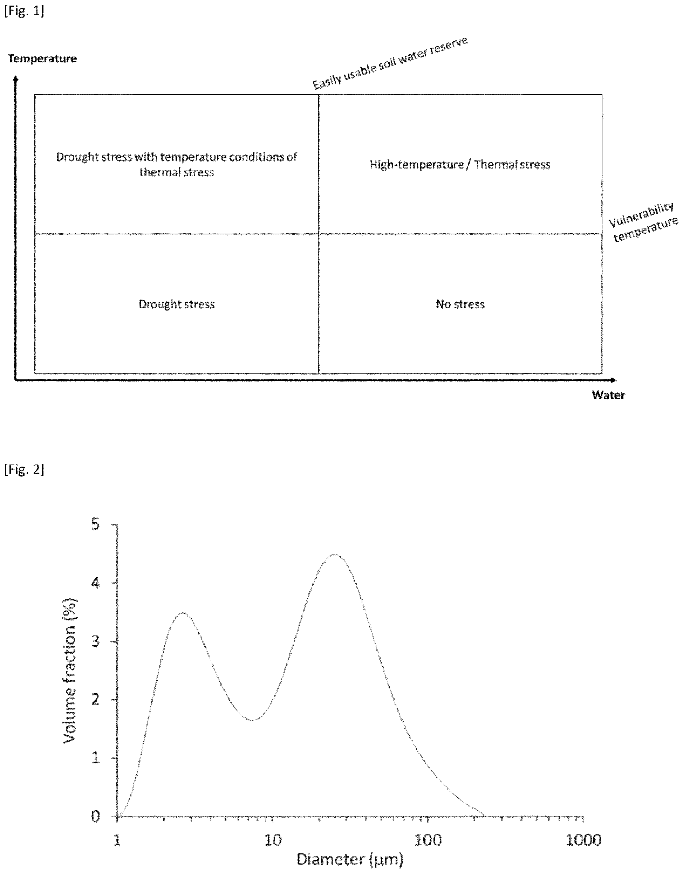

Regarding thermal and drought stresses, it appears from the above that three scenarios can be drawn (see figure 1):
1. The plant is exposed to temperatures higher than the temperature threshold leading to high-temperature stress and the easily usable soil water reserve is easily reachable. The plant is now under the situation of thermal stress;
2. The plant is exposed to temperatures below the temperature threshold of high-temperature stress and above the low-temperature stress threshold, and the soil survival reserve has been achieved. The plant is now under the situation of drought stress occurring without conditions of a thermal stress;
3. The plant is exposed to temperatures higher than the temperature threshold leading to high-temperature stress and the soil survival reserve has been achieved. The plant is now under the situation of drought stress occurring with conditions of a thermal stress.

As used therein, the expression "at an early stage of the plant's growth" refers to the germination and vegetative phases, that is an interval between the beginning of germination and before the plant flowers. In particular, it refers to the stage during which the leaves of the plant cover the inter-row (row sowing crop cultivation). The skilled artisan knows that this early stage of the plant's growth is crop-dependent.

As used therein, the term "irrigation" refers to the anthropogenic addition of a supply of water to the soil solution that is taken up by the root system of the plant.

As used therein, the terms "anthropic" and "anthropogenic" may be used interchangeably and refer to a human-decided action.

As used herein, the expressions "treated plant" and "treated crop" may be used interchangeably and refer to a plant or crop which is preventively treated (i.e. treated at an early stage, before exposure to an abiotic or biotic stress) with the composition of the invention and which undergoes growth by being exposed to soil and climatic conditions and stresses, notably at least one abiotic stress, preferably a multi-abiotic stresses sequence, such as a thermal stress optionally preceded and/or followed by a drought stress which occurs with or without temperature conditions of thermal stress.

As used herein, the expressions "control plant", "control crop" and "untreated control" may be used interchangeably and refer to a plant or crop which is untreated with the composition of the invention and which undergoes growth by being exposed to the same soil and climatic conditions and stresses, notably at least one abiotic stress, preferably a multi-abiotic stresses sequence, as the treated candidate plant.

As used therein, the expressions "prior to the onset of abiotic stress" and "prior to the exposure to an abiotic stress" particularly with regard to drought stress, may be used interchangeably and refer to the period during which the useful soil water reserve is properly filled, i.e., the time elapsed from the moment when the useful soil water reserve is sufficiently or completely full (field capacity) to the moment when the wilting point is reached.

As used therein, the expressions "prior to the onset of abiotic stress," and "prior to the exposure to an abiotic stress" particularly with regard to thermal stress, may be used interchangeably and refer to the period before the point of vulnerability to flower blast for each plant species and each developmental stage of these species. In other words, it refers to temperatures that are unfavourable to the growth and development of the plant, apart from all other crop conditions, such as water supply.

As used therein, the expressions "plant sterol" and "phytosterol" may be used indifferently and refer to any vegetally-occurring or chemically synthesized sterol.

As used herein, the term "easily usable soil water reserve" (or EUSWR) refers to the proportion of the usable soil water reserve (USWR) that a cultivated plant can extract without reducing its transpiration (or evapotranspiration), experiencing drought stress, or limiting its growth. The EUSWR generally represents 40% to 80% of the USWR depending on the depth of the soil and the species of plants cultivated.

As used herein, the term "soil survival reserve" (or SSR) refers to the proportion of the USWR that a cultivated plant cannot extract. The plant is consequently in a state of drought stress because its transpiration (or evapotranspiration) is not reduced. Therefore, the cultivated plant limits its growth or even wilts.

As used herein, the term "wilting point" (or WP) refers to the soil water status below which the plant can no longer draw the water necessary for its growth, i.e., the point below which the tension between the roots and the plant is high and the roots can no longer extract water from the soil. It is therefore the threshold below which the cultivated plant has entirely consumed the EUSWR and will wilt, albeit reversibly, but with an impact on the yield. This parameter is determined in particular through the measurement of soil humidity, for example by means of a neutron probe, a tensiometer or a time-domain reflectometry (TDR) moisture meter. The wilting point depends on the field capacity, on the amount of water available to the plant according to the various soil types and on the variety of plant cultivated.

As used therein, the expression "water-use efficiency" (hereafter abbreviated WUE) is defined as the amount of carbon assimilated as biomass or grain produced per unit of water effectively used by the crop during its lifetime.

As used herein, the term "dry matter" refers to the matter derived from organic matter that remains after removal of all the water it contains.

As used herein, the term "yield" refers to the amount of product harvested, whether seeds or fruits, dry matter or green matter, or wine, over a given cultivation area.

As used herein, the expression "preserving yield" refers to the maintenance of the per-hectare yield, i.e., the yield of the crop treated with the composition of the invention is essentially the same as the yield of the untreated crop, both treated and untreated crops being exposed to the same stress or multiple stresses climatic scenario.

As used herein, the term "cultivated plant," in contrast to a naturally existing plant, refers to all plants that can be cultivated, i.e., sown, planted, and exploited by man.

As used therein, the terms "crops" and "plants" may be used indifferently and refer to all plants and plant populations such as desirable and undesirable wild plants, cultivars, and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods.

As used therein, the term "plant" includes whole plants and parts thereof, including, but not limited to, shoot vegetative organs/structures (e.g., leaves, stems and tubers), roots, flowers and floral organs/structures (e.g., bracts, sepals, petals, stamens, carpels, anthers and ovules), seeds (including embryo, endosperm, and seed coat) and fruits (the mature ovary), plant tissues (e.g., vascular tissue, ground tissue, and the like) and cells (e.g., guard cells, egg cells, and the like), and progeny of same. "Fruit" and "plant produce" are to be understood as any plant product which is further utilized after harvesting, e.g., fruits in the proper sense, nuts, wood etc., that is anything of economic value produced by the plant.

As used therein, the expressions "optimum production" and "optimum yield" may be used interchangeably and refer to the measured yield of the best cultivar, grown with optimal agronomy and without biotic and/or abiotic stresses, under natural resource and cropping system conditions representative of the target area.

As used therein, the expression "effective amount" is an amount sufficient to affect beneficial or desired results.

As used therein, the expressions "daily air temperature" and "air temperature" may be used interchangeably and refer to the maximum daily temperature recorded during a 24-hour period (i.e., one day and one night).

As used therein, the term "slurry" refers to the composition of the invention diluted in water or in a solution containing water and one or more active ingredients. The product which is applied on the plant in the fields is the slurry.

As used therein, the term "bactericide" refers to the ability of a substance to increase mortality or inhibit the growth rate of bacteria.

As used therein, the terms "insecticide" and "insecticidal" refer to the ability of a substance to increase mortality or inhibit growth rate of insects.

As used herein, the term "insects" comprises all organisms in the class "Insecta".

As used therein, the terms "nematicide" and "nematicidal" refer to the ability of a substance to increase mortality or inhibit the growth rate of nematodes. In general, the term "nematode" comprises eggs, larvae, juvenile and mature forms of said organism.

As used therein, the terms "acaricide" and "acaricidal" refer to the ability of a substance to increase mortality or inhibit growth rate of ectoparasites belonging to the class Arachnida, sub-class Acari.

As used herein, "biocontrol product" is defined as agents or products that use natural mechanisms. They form a set of tools that can be used, alone or in combination with other plant protection methods, to combat crop enemies in integrated pest management. There are four main types of biocontrol agents:
> Auxiliary macro-organisms (to fight aggressors): invertebrates, insects, mites, or nematodes used in an integrated approach to protect crops from bio-aggressors.
> Phytopharmaceutical products, including:
   Micro-organisms (to control aggressors): fungi, bacteria and viruses used to protect crops from pests and diseases or boost plant vitality. According to the invention, these microorganisms are not used /does not act to preserve yield of a cultivated crop exposed to a thermal stress possibly preceded or followed by a drought stress occurring with or without thermal stress conditions.
> Chemical mediators: insect pheromones and kairomones. These can be used to track the flights of insect pests and control insect populations through mating disruption or trapping.
> Natural substances: these substances obtained from plant, microbial, animal, or mineral sources are found in the natural environment and used as biocontrol products.

As used therein, the expression "foliar spraying" refers to a pressurized projection of a slurry that forms a large number of microdroplets that cover the upper and/or lower surfaces of the treated leaf.

The use of "a" or "an" for a molecule does not exclude, unless otherwise stated, the presence of plurality of molecules, in such a way that the expression "one or more" can be substituted for it.

As used therein, the expression "insoluble in the aqueous phase" refers to a compound which presents the inability to form with water a homogenous, one-phase solution at the microscopic or the macroscopic level, at a given temperature and atmospheric pressure.

By contrast and as used therein, the term "solubility" refers to a compound which leads to a homogenous solution without remaining insoluble particles when it is added to a liquid, at a given temperature and atmospheric pressure.

Any percentage by weight of a molecule of the invention refers to the total weight of the said invention, which means relative to the sum of all ingredients giving a hundred. Weight percent can by symbolised as wt%.

Various aspects of the invention can be presented in a range format. The description in range format is merely for convenience and conciseness and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 2.7, 3, 4, 5, 5.3, and 6. This applies regardless of the breadth of the range.

To the extent to which any of the above-mentioned definitions cannot be correlated with previous definitions provided in any patent, scientific literature, or non-patent prior art (referenced herein or even not referenced herein), then it is understood that these above-mentioned definitions will be used herein.

### Detailed description of the invention

The Applicant has thus surprisingly found a method for maintaining yield while reducing the water used in the irrigation of a field-cultivated crop exposed to at least one abiotic stress. The method allows to preserve water resources while protecting the plant from exposure to abiotic stress and preserve dry matter production and/or yield, compared to an untreated, but irrigated crop. This method therefore allows meeting the aforementioned needs.

According to an aspect, the invention concerns a method for preserving yield while reducing the water used in anthropogenic irrigation of a field-cultivated crop exposed to at least one abiotic stress comprising the step of:
a) applying to the field-cultivated crop, at an early stage of its growth and prior to exposure of said cultivated crop to said abiotic stress, a composition comprising at least one phytosterol and at least one surfactant;
b) irrigating the field during the time the field-cultivated crop is exposed to said abiotic stress with a reduced amount of water compared to the amount of water used in a normal irrigation condition for an untreated crop.

The Applicant has made the hypothesis that the prophylactic applied composition to the plant increases its water uptake during exposure to said thermal stress to decrease the internal temperature of the cultivated crop by evapotranspiration during exposure to said thermal stress.

The preventive treatment of the invention offers various advantages, in particular:
- a preservation of water resources,
- a preservation of the yield, notably by increasing the water-use efficiency (WUE),
- to propose an appropriate response to climate change considering the ecological and economic aspects.

The composition of the invention is particularly suitable to lead to water saving when:
- The plant is exposed to temperatures higher than the temperature threshold leading to high-temperature stress and the EUSWR is easily reachable. The plant is here under the situation of thermal stress.
- The plant is exposed to temperatures higher than the temperature threshold leading to high-temperature stress and the EUSWR is easily reachable, then the said plant is exposed to temperatures below the temperature threshold of high-temperature stress and the SSR has been achieved. The plant is now under the situation of thermal stress followed by a drought stress occurring without conditions of a thermal stress.
- The plant is exposed to temperatures higher than the temperature threshold leading to high-temperature stress and the EUSWR is easily reachable, then the said plant is exposed to temperatures higher than the temperature threshold of high-temperature stress and the SSR has been achieved. The plant is now under the situation of thermal stress followed by a drought stress occurring with conditions of a thermal stress.

Thus, according to an embodiment of the invention, the method of the invention is characterized in that the cultivated crop is exposed to at least one abiotic stress which is a drought stress or a thermal stress.

According to another embodiment of the invention, the method of the invention is characterized in that the cultivated crop is exposed to a multiple stress climatic scenario, i.e., a thermal stress followed by a drought stress, said drought stress occurring with temperature conditions of a thermal stress.

According to another embodiment of the invention, the method of the invention is characterized in that the cultivated crop is exposed to a multiple stress climatic scenario, i.e., a thermal stress followed by a drought stress, said drought stress occurring without temperature conditions of a thermal stress.

The method of the invention is characterized in that the cultivated crop is exposed to a multiple stress climatic scenario, i.e., a drought stress, said drought stress occurring with temperature conditions of a thermal stress followed by a thermal stress.

The method of the invention is characterized in that the cultivated crop is exposed to a multiple stress climatic scenario, i.e., a drought stress, said drought stress occurring without temperature conditions of a thermal stress followed by a thermal stress.

Indeed, the prophylactic application of the composition of the invention leads to physiological modifications of the plant such as increasing root lengths and closing stomata to mitigate evapotranspiration or opening stomata to decrease its internal temperature, notably by evapotranspiration.

In particular, it was found that during drought (i.e., drought stress conditions), plants treated prophylactically with a composition containing a plant sterol and a surfactant modify their physiology, leading to increasing root lengths and closing stomata to mitigate evapotranspiration. In other words, this adapted behavior of the plant allows to decrease the quantity of water supplied by irrigation and/or the moment to irrigate the plant in response to an abiotic stress, notably a drought stress.

In particular, it was found that during extreme heat (i.e., thermal stress conditions), plants treated prophylactically with a composition containing a plant sterol and a surfactant increase water uptake in comparison to untreated plants, while during lower temperature season the treatment results in a lower water uptake and preservation of the moisture in the soil of the same plant, again compared to untreated plants. As a result, treated cultivated plants with such composition can manage and optimize themselves their water uptake and consumption depending on climate (i.e., presence or absence of an abiotic stress), thus optimizing the yield of production while saving water. In other words, this adapted behavior of the plant allows to decrease the quantity of water supplied by irrigation and/or the moment to irrigate the plant in response to an abiotic stress, notably a thermal stress.

*In fine,* the method of the invention allows maintaining the per-hectare yield and keeping the dry matter while preserving water resources. This effect is quantified by the calculation of the water use efficiency (WUE), that is to say the amount of biomass produced in regard to the quantity of water the said crop has received. Since the harvest yield is correlated to the quotient of WUE and evapotranspiration, and this evapotranspiration is directly correlated to the water supply, it means therefore that an increase of the WUE at the same level to a decrease of the water supply gives the same harvest yield. This quantitative value is therefore a factor of merit showing how the plant can manage its water. Abiotic stresses such as thermal stress or drought stress are known by the skilled person to decline this WUE. Thus, securing the WUE thanks to a composition of the invention will help the farmer resolving deleterious impacts of the climate change.

The Applicant has thus surprisingly found that the method of the invention offers various advantages, in particular it displays different water consumption regimes depending on the abiotic stress(es) to which the plant is exposed, in particular drought stress and/or thermal stress. This is what the Applicant calls water saving. This water saving allows reducing any negative impact of these abiotic stresses, e.g., drought stress and/or thermal stress, while guaranteeing the necessary and sufficient supply of water (quantity and/or timing of irrigation) to increase the WUE and keeping the production of dry matter/yield, especially in a context of climate change, and without wasting water resources.

Moreover, the invention allows the plant to stay within the photosynthesis optimum, that is to avoid instability of CO₂ assimilation and have water available to allow the production of organic matter by the plant. Indeed, it was observed that the composition of the invention, when applied to the crop as a preventive treatment, i.e., at an early stage and prior to the onset of an abiotic stress, enabled a reduction in the harmful effects of abiotic stress(es), for example drought stress and/or thermal stress, notably the loss of dry matter and the resulting decrease in per-hectare yields. Thus, treating the plant with the composition of the invention allows securing yields, fresh weight, root length and other agricultural key parameters in case of the emergence of an abiotic stress such as thermal stress and possibly preceded or followed by drought stress, according to various biological mechanisms, such as if the treated plant was not affected to these particular stresses.

In other words, the invention has the unexpected advantage that the plant adapts its physiology and its water management behaviour, with the aim of preserving the water resources, the WUE, the yields, the production of dry weight and in particular of preserving the optimum production, according to several external parameters such as the climate change and the anthropic water supply.

According to a specific embodiment, the early stage of the cultivated-crop growth in step a) is:
- for maize (also known as corn, both can be used indifferently in the following description), this early stage period is from 3 visible leaves (V1) to 12 visible leaves (V12), advantageously the application phenological stage is 8-10 visible leaves (V9);
- for winter and spring wheat, and for winter barley and spring barley, this early stage period is from stem elongation (BBCH 30) to end of booting (BBCH 49), advantageously the application phenological stage are second node (BBCH 32) and/or flag leaf fully emerge (BBCH 39);
- for sunflower, this early stage period is from 2 leaves unfolded (BBCH 12) to beginning of inflorescence emergence (BBCH 51), advantageously the application phenological stage is 8 to 10 leaves unfolded (BBCH 18-20);
- for rapeseed, this early stage period is from 2 leaves unfolded (BBCH 12) to the end of stem elongation (BBCH 39), advantageously the application phenological stage is 9 or more leaves unfolded (BBCH 19);
- for sorghum, this early stage period is from 3 leaf (stage 1) to flag leaf visible (stage 4), advantageously the application phenological stage is growing point differentiation (stage 3);
- for millet, this early stage period is from stem elongation (BBCH 30) to end of booting (BBCH 49), advantageously the application phenological stage are second node (BBCH 32) and/or flag leaf fully emerge (BBCH 39);
- for cotton, this early stage period is from first leaf (BBCH 11) to first floral bud (BBCH 51), advantageously the application phenological stage is before the first floral bud (BBCH 51).

According to an embodiment of the invention, the method of the invention comprises, prior to step a), a step of monitoring weather forecast for the related trigger points and then a step of applying the composition comprising at least one phytosterol and at least one surfactant at an early stage of the cultivated crop growth and prior to its thermal and/or drought stress exposure.

According to specific embodiments of the invention, the cultivated-crop is considered exposed to a drought stress condition when the said plant is below its wilting point, which means that the water reserve is under the soil survival reserve.

According to specific embodiments of the invention, the cultivated-crop is considered exposed to a thermal stress condition when:
- the crop is corn and the thermal stress occurs when the air temperature of vulnerability of said crop is equal to or greater than 30 °C;
- the crop is soybean, and the thermal stress occurs when the air temperature of vulnerability of said crop is equal to or greater than 30 °C;
- the crop is millet, and the thermal stress occurs when the air temperature of vulnerability of said crop is equal to or greater than 36 °C;
- the crop is sunflower, and the thermal stress occurs when the air temperature of vulnerability of said crop is equal to or greater than 28 °C;
- the crop is winter wheat, and the thermal stress occurs when the air temperature of vulnerability of said crop is equal to or greater than 25 °C;
- the crop is spring wheat, and the thermal stress occurs when the air temperature of vulnerability of said crop is equal to or greater than 22 °C;
- the crop is rapeseed, and the thermal stress occurs when the air temperature of vulnerability of said crop is equal to or greater than 29 °C;
- the crop is sorghum, and the thermal stress occurs when the air temperature of vulnerability of said crop is equal to or greater than 32 °C;
- the crop is cotton, and the thermal stress occurs when the air temperature of vulnerability of said crop is equal to or greater than 40 °C;
- the crop is winter barley, and the thermal stress occurs when the air temperature of vulnerability of said crop is equal to or greater than 26 °C;
- the crop is spring barley, and the thermal stress occurs when the air temperature of vulnerability of said crop is equal to or greater than 24 °C.

It comes from the above that these values should not be considered as absolute thresholds and the thermal stress which affects a plant is in fact a multifactor composition of hygrometry, rate of increase of temperature, soil composition and other factors which are known from the skilled artisan. In other words, mentioning a temperature threshold does not necessarily mean that exactly below the temperature threshold the plant is not under thermal stress and exactly above the temperature threshold the plant is under thermal stress.

According to a specific embodiment, the method of the invention allows reducing the amount of anthropogenically applied water by at least 20%vol., 30%vol., 40%vol., 50%vol., 60%vol., 70%vol., or even 80%vol. compared to the amount of water used in a normal irrigation condition for an untreated crop. In other words, the amount of anthropogenically applied water corresponds at most to 80 %vol., 70 %vol., 60 %vol., 50 %vol., 40 %vol., 30 %vol., or even 20 %vol., of the amount of water used in a normal irrigation condition for an untreated crop.

According to a specific embodiment, the method of the invention allows improving the water use efficiency of a treated crop, by 2%, 5%, 10%, 15%, 20%, even 25%, so that the said crop can produce the same quantity of biomass but with a lower uptake of water.

According to a specific embodiment, the method of the invention allows postponing the irrigation date of the treated crop, in particular, the method comprises the step of irrigating the field with water in an amount equivalent or reduced compared to the untreated crop exposed to the same abiotic stress, said irrigation date of the treated crop being shifted by at least 1 day to 15 days or at least 1 day to 20 days after the irrigation date of the untreated crop.

According to an embodiment, the field-cultivated crop is selected in the group consisting in corn, soybean, millet, sunflower, spring wheat, winter wheat, spring barley, winter barley, cotton, rapeseed and sorghum.

The surfactant present in the composition plays a particular role in the wetting properties of the composition and in the penetration of the composition through the cuticle, notably through a solubilization of the epicuticular waxes (the waxes situated on the outermost part of the surface of the cuticle) and of some or all of the waxes present on the inside of the cutin layer, thereby creating access pathways for active ingredients such as phytosterols to enter into the plant.

As a consequence, it is possible to reduce the quantity of phytosterols contained in the composition by improving its diffusion into the cellular membrane of the plant in order to obtain beneficial effects for the plant that are at least similar to, and usually better than, those provided by the compositions of the prior art.

An essential feature of the invention is that the composition contains at least one sterol, and notably at least one plant sterol, also known as phytosterol.

According to an embodiment, said at least one phytosterol represents between 0.2% and 10% of the composition by weight, advantageously between 0.5% and 7%, and preferably between 1% and 5%.

The phytosterols mixture of the invention contains free phytosterols and/or conjugated phytosterols and/or encapsulated sterols, with the conjugated phytosterols being advantageously selected from among the group comprising phytosterol esters, phytosterol glycosides, acylated phytosterol glycosides and mixtures thereof.

Examples of free phytosterols in the context of the invention include β-sitosterol, campesterol, stigmasterol, cholesterol and brassicasterol, and mixtures thereof.

One example of a phytosterol ester in the context of the invention is that of esterified β-sitosterol.

Examples of phytosterol glycosides in the context of the invention include β-sitosterol-β-D-glucoside and glucosyl stigmasterol.

Examples of acylated phytosterol glycosides in the context of the invention include 16:0 sitosteryl glucose, 18:1 sitosteryl glucose, 16:0 stigmasteryl glucose, and 18:1 stigmasteryl glucose.

Examples of encapsulated sterol include but are not limited to sterols coated with any natural lecithin or starch, or sterols forming a guest/host system with molecular cages such as dextrins or other macrocycles.

These mixtures of phytosterols can also contains at least one precursor of the phytosterols' biosynthetic pathway or at least one of its derivatives. This can be, for example, a molecule selected from among the group comprising squalene, mevalonate and/or cycloartenol.

Usually, the phytosterols mixture in the context of the invention contains β-sitosterol.

Advantageously, the phytosterols mixture contains β-sitosterol, representing at least 30% of the phytosterols mixture by weight, preferably at least 35%, with the balance to 100% containing in particular, and where appropriate, campesterol, stigmasterol and brassicasterol.

As an example, a phytosterols mixture of the invention can be an extract of phytosterols obtained from oleaginous seeds such as soybeans, sunflower seeds, or canola seeds. One possible example of said phytosterols mixture is the raw material with CAS number [949109-75-5]. Phytosterols mixture of the invention can also be an extract of phytosterols obtained from pine's wood after conversion into wood pulp.

Advantageously, the composition of the invention contains a phytosterols mixture which represents between 0.2% and 10% of the composition by weight, advantageously between 0.5% and 7%, and preferably between 1% and 5%.

The composition according to the invention which contains at least one plant sterol and at least one surfactant can be prepared according to any of the formulation which are typically used in chemistry. This formulation can be under the form of a homogenous or heterogenous aqueous solution, an emulsifiable concentrate, a concentrated suspension, an oil-in-water or a water-in-oil emulsion, an oil-in-water or a water-in-oil suspo-emulsion, an oil dispersion and/or any other formulation the skilled artisan may use to prepare a composition which contains at least one plant sterol and at least one surfactant to be used as a preventive treatment for water management of cultivated crops.

### Aqueous solution

According to an embodiment of the invention, the composition of the invention has the form of an aqueous solution comprising:
- 80 to 98 wt% of water,
- 2 to 20 wt% of a composition containing at least one phytosterol and at least one surfactant (SF0).

Advantageously, the composition of the invention has the form of an aqueous solution comprising:
- 85 to 95 wt% of water,
- 5 to 15 wt% of a composition containing at least one phytosterol and at least one surfactant (SF0).

Even more advantageously, the composition of the invention has the form of an aqueous solution comprising:
- 90 to 94 wt% of water,
- 6 to 10 wt% of a composition containing at least one phytosterol and at least one surfactant (SF0).

Practically, the aqueous solution is obtained according to the following process:
- The at least one phytosterol and the at least one surfactant are grinded (alone or together) to reach particle size distribution (also named Dv90) with values less than 500 µm, advantageously less than 200 µm, preferably less than 100 µm, in particular less than 50 µm, even better if less than 20 µm. Advantageously, the size of the particles is between 0.1 and 20 µm.
- The at least one phytosterol and the at least one surfactant are then dispersed in water (or diluted in water if the surfactant is soluble in water) and the composition is stirred until a homogenous composition is reached.

According to another embodiment this process can be performed in the reverse order, that is to say dispersing the at least one phytosterol and the at least one surfactant in water and then grinding the molecules according to the specifications as mentioned.

### Emulsion

According to another embodiment of the invention, the agricultural composition of the invention has a form of an oil-in-water emulsion (O/W) comprising:
- at least one surfactant (OIL SF1 or WATER SF1);
- an aqueous phase representing between 80 and 98 wt%, advantageously between 85 to 95 wt%, preferably between 90 to 94 wt% of the composition, if the said surfactant is soluble in water, said aqueous phase comprising the said surfactant (WATER SF1); and
- an oily phase representing between 2 and 20 wt%, advantageously between 5 to 15 wt%, preferably between 6 to 10 wt% of the composition, if the said surfactant is soluble in oil, said oily phase comprising the at least one phytosterol and the said surfactant (OIL SF1).

Practically, the oil-in-water emulsion (O/W) is obtained according to the following process:
- preparation of the lipophilic phase is conducted at high temperature, preferably in a range between about 70 °C to about 140 °C, preferably between about 90 °C to about 120 °C, more preferably about 110 °C;
- preparation of the aqueous phase is conducted at high temperature, preferably in a range between about 50 °C to about 90 °C, preferably between about 70 °C to about 90 °C, more preferably about 80 °C;
- stirring is conducted until an emulsion of lipophilic droplets is obtained, preferably at least 90% of said lipophilic droplets (Dv90) having a diameter comprised between 0.01 and 70 µm, preferably between 0.1 and 50 µm, most preferably between 0.1 and 20 µm, advantageously between 0.5 to 7 µm, preferably between 2 and 6 µm as determined by laser diffraction,
- cooling of the emulsion is conducted until a temperature of between 20 °C and 30 °C, preferably between 20 °C and 25 °C is reached.

In both embodiments (aqueous solution and oil-in-water emulsion (O/W)), the mass ratio of the phytosterol/surfactant mixture in composition containing at least one phytosterol and at least one surfactant (WATER SF1 or OIL SF1) is practically between 0.01 and 5, advantageously between 0.1 and 2.5, preferably between 0.2 and 1.

In practice, SF0, WATER SF1 or OIL SF1 is selected according from among the group comprising:
- anionic surfactants, advantageously anionic surfactants whose polar head group is a carboxylate, a sulfonate or a sulfated alcohol;
- cationic surfactants, advantageously cationic surfactants whose polar head group is an amine, a quaternary amine or a quaternary ammonium ester;
- amphoteric surfactants, advantageously betaine derivatives or phospholipids;
- neutral surfactants, advantageously ethoxylates, alkanolamines, alkylglucamides, polyol esters, alkyl monoglucosides or alkyl polyglucosides, or polyol ethers, polyoxyethylene sorbitan esters (especially Tween 20, Tween 21, Tween 22, Tween 23, Tween 24, Tween 28, Tween 40, Tween 60, Tween 61, Tween 65, Tween 80, Tween L-0515, Tween L-1010, Tween L-1505), or sorbitan esters (especially Span 20, Span 40, Span 60, Span 65, Span 80, Span 83, Span 85, Span 120);
- natural surfactants, advantageously lecithins, preferably soy lecithin or other lecithins, or surfactants derived from amino acids; and
- surfactants synthesized from natural raw materials, advantageously polyol derivatives, preferably fatty acid sugar esters; the preferred fatty acid sugar esters are saccharose stearate, saccharose palmitate and their polyesters, or mixtures thereof.

In the description and in claims the terms "sucrose stearate" and "saccharose stearate" are used indifferently. As well, "sucrose palmitate" and "saccharose palmitate" are used indifferently.

In accordance with the invention, the expression "saccharose stearate" designates pure saccharose stearate or a mixture of saccharose esters of fatty acids containing mostly saccharose stearate. Example of pure saccharose stearate corresponds to CAS number [136152-91-5]. Example of a mixture of saccharose ester of fatty acids containing mostly saccharose stearate corresponds for example to CAS number [25168-73-4] or [84066-95-5].

In accordance with the invention, the expression "saccharose palmitate" designates pure saccharose palmitate or a mixture of saccharose esters of fatty acids containing mostly saccharose palmitate. Example of pure saccharose palmitate corresponds to CAS number [110539-62-3]. Example of a mixture of saccharose ester of fatty acids containing mostly saccharose palmitate corresponds to CAS number [26446-38-8].

According to a specific embodiment, surfactant SF0 or WATER SF1 or OIL SF1 is a mixture containing:
- between 20% and 80% by weight, advantageously 70% saccharose stearate with a monoester content ranging between 20% and 80% by weight of saccharose stearate, advantageously 70%, with the balance being a mixture of di-, tri- and/or polyesters; and
- between 20% and 80% by weight, advantageously 30% saccharose palmitate with a monoester content ranging between 20% and 80% by weight of saccharose palmitate, advantageously 70%, with the balance being a mixture of di-, tri- and/or polyesters.

According to a specific embodiment, SF0, WATER SF1 or OIL SF1 is sucrose stearate (preferably CAS number [25168-73-4] or [84066-95-5]).

### Multiphase formulation

According to another embodiment, the agricultural composition of the invention has a form of an oil-in-water emulsion (O/W) where the aqueous phase contains a surfactant that is in particulate form, with this composition also being referred to below as a multiphase composition.

Consequently, the invention also relates to a multiphase agricultural composition in the form of a suspo-emulsion, comprising lipophilic droplets containing a mixture of phytosterols, said lipophilic droplets being dispersed in an aqueous phase.

In the description, lipophilic droplets are also named oil droplets.

The composition is deemed to be "multiphase" in that it comprises two distinct oil and water phases, but it cannot be described as a suspension or as an emulsion, given that the aqueous phase also contains a third phase made of solid particles. It could therefore be described as a suspo-emulsion.

### Multiphase formulation using one surfactant

According to a first embodiment, the multiphase composition is in the form of a suspo-emulsion, said suspo-emulsion, comprising lipophilic droplets containing the at least one phytosterol, said lipophilic droplets being dispersed in an aqueous phase, the composition further comprising only one surfactant (SF2) located at two different places, respectively at the interface between the lipophilic droplets and the aqueous phase, and suspended in the aqueous phase under the form of particles which are insoluble in the aqueous phase.

Preferably, SF2 is selected from the group comprising the fatty acid sugar esters.

Indeed, fatty acid sugar esters have a preferred oil solubility or water solubility depending on heating temperature and therefore may be used at the interface between the lipophilic droplets.

The same fatty acid sugar esters are solid and insoluble in water at ambient temperature; hence they may be suspended in the aqueous phase.

This explains why the same surfactant may present in aqueous phase and at the interface between the lipophilic droplets and the aqueous phase.

Advantageously, SF2 is saccharose stearate, saccharose palmitate and their polyesters, or mixtures thereof, preferably saccharose stearate.

### Multiphase formulation using at least two different surfactants

According to a specific embodiment, SF2 is sucrose stearate or, advantageously, a mixture containing saccharose stearate and sucrose palmitate; in particular is a mixture containing:
- between 20% and 80% by weight, advantageously 70% saccharose stearate with a monoester content ranging between 20% and 80% by weight of saccharose stearate, advantageously 70%, with the balance being a mixture of di-, tri- and/or polyesters; and
- between 20% and 80% by weight, advantageously 30% saccharose palmitate with a monoester content ranging between 20% and 80% by weight of saccharose palmitate, advantageously 70%, with the balance being a mixture of di-, tri- and/or polyesters.

According to a specific embodiment, the surfactant (SF2) located at the interface of the lipophilic droplets and of the aqueous phase represents between 0.2% and 10% of the composition by weight, and the surfactant (SF2) suspended in the aqueous phase under the form of particles insoluble in the aqueous phase represents between 0.01% and 5% of the composition by weight.

Advantageously, the surfactant (SF2) located at the interface of the lipophilic droplets and of the aqueous phase represents between 3% and 7% of the composition by weight, and the surfactant (SF2) suspended in the aqueous phase under the form of particles insoluble in the aqueous phase represents between 0.1% and 2.5% of the composition by weight and SF2 is advantageously sucrose stearate (preferably CAS number [25168-73-4] or [84066-95-5]).

According to a second embodiment, the multiphase composition is in the form of a suspo-emulsion, said suspo-emulsion, comprising lipophilic droplets containing the at least one phytosterol, said lipophilic droplets being dispersed in an aqueous phase, the composition further comprising:
- at least one first surfactant (SF3) located at the interface between the lipophilic droplets and the aqueous phase and selected from among the SFs that are soluble in the aqueous phase (WATER SF3) and the SFs that are soluble in the lipophilic droplets (OIL SF3); and
- at least one second surfactant (SF4) suspended in the aqueous phase, said second surfactant having the form of particles which are insoluble in the aqueous phase, with SF3 being different from SF4.

The first surfactant SF3 may present a preferential oil solubility (OIL SF3), a preferential water solubility (WATER SF3) or can also present both oil and water solubility, the solubilities between oil and water being here different or identical. This last feature allows the possibility that OIL SF3 and WATER SF3 are the same molecule.

In other words, the surfactant SF3 located at the interface between the lipophilic droplets and the aqueous phase is selected from among the SFs that are soluble in the aqueous phase (WATER SF3) and the SFs that are soluble in the lipophilic droplets (OIL SF3). Generally, and if different, WATER SF3 and OIL SF3 differ from each other by the proportion of their hydrophobic and hydrophilic parts. Practically, the hydrophilic/lipophilic balance (HLB) of WATER SF3 is higher than the one of OIL SF3. In contrast, the HLB of OIL SF3 is lower than the one of WATER SF3.

Advantageously, the surfactant WATER SF3 is soluble in water heated at 80 °C at a concentration of at least 2 g/L.

Advantageously, the surfactant OIL SF3 is soluble in the oil phase heated at 110 °C at a concentration of at least 2 g/L.

Advantageously, the limit of solubility in water of the surfactant suspended in the aqueous phase (SF4) observed practically at 25 °C is less than 10 mg/L, preferably less than 5 mg/L, more preferably, less than 2 mg/L.

According to the invention, the majority of the lipophilic droplets present in the multiphase composition before addition of SF2 or SF4 in the aqueous phase, advantageously at least 90% of the lipophilic droplets (also named Dv90 emulsion) have a diameter comprised between 0.01 and 70 µm, preferably between 0.1 and 50 µm, most preferably between 0.1 and 20 µm, advantageously between 0.5 to 7 µm, preferably between 2 and 6 µm as determined by laser diffraction.

Advantageously at least 90% of the particles of the multiphase composition of the invention (also named Dv90 suspo-emulsion) have a diameter comprised between 1 and 1000 µm, advantageously between 10 and 250 µm with a peak maximum preferably of between 10 µm and 100 µm as determined by laser diffraction.

In practice, SF3 and SF4 are selected according to the desired solubility in lipophilic droplets or in water, from among the group comprising:
- anionic surfactants, advantageously anionic surfactants whose polar head group is a carboxylate, a sulfonate or a sulfated alcohol;
- cationic surfactants, advantageously cationic surfactants whose polar head group is an amine, a quaternary amine or a quaternary ammonium ester;
- amphoteric surfactants, advantageously betaine derivatives or phospholipids;
- neutral surfactants, advantageously ethoxylates, alkanolamines, alkylglucamides, polyol esters, alkyl monoglucosides or alkyl polyglucosides, polyol ethers, polyoxyethylene sorbitan esters (especially Tween 20, Tween 21, Tween 22, Tween 23, Tween 24, Tween 28, Tween 40, Tween 60, Tween 61, Tween 65, Tween 80, Tween L-0515, Tween L-1010, Tween L-1505), or sorbitan esters (especially Span 20, Span 40, Span 60, Span 65, Span 80, Span 83, Span 85, Span 120);
- natural surfactants, advantageously lecithins, preferably soy lecithin, or surfactants derived from amino acids; and
- surfactants synthesized from natural raw materials, advantageously polyol derivatives, preferably fatty acid sugar esters; the preferred fatty acid sugar esters are saccharose stearate, saccharose palmitate and their polyesters, or mixtures thereof.

Preferably, the composition contains at least one OIL SF3 or WATER SF3 and at least one SF4, OIL SF3, WATER SF3 and SF4 being selected from among the group comprising the fatty acid sugar esters.

As relating to SF2, fatty acid sugar esters may be used as both WATER SF3 and OIL SF3 since they are soluble in oil and in water at elevated temperatures, typically more than 80 °C, with different solubility constants. Indeed, sucrose esters can become soluble in water, but at high temperature only. It concerns for example sucrose stearate which is soluble in water at around 80 °C. Fatty acid sugar esters are also soluble in the oil droplets, but only to the condition that they undergo prior heating to their melting temperature, which can easily be determined by a person skilled in the art.

Also, these esters are solids at ambient temperature. Being naturally lipophilic compounds, they are insoluble in the aqueous phase at a standard temperature of 20 °C and are therefore potent candidates for the role of SF4.

Advantageously, the fatty acid sugar esters are saccharose stearate, saccharose palmitate and their polyesters, or mixtures thereof.

According to a specific embodiment, the surfactant SF4 contains sucrose stearate or, advantageously, a mixture containing saccharose stearate and sucrose palmitate; in particular is a mixture containing:
- between 20% and 80% by weight, advantageously 70% saccharose stearate with a monoester content ranging between 20% and 80% by weight of saccharose stearate, advantageously 70%, with the balance being a mixture of di-, tri- and/or polyesters; and
- between 20% and 80% by weight, advantageously 30% saccharose palmitate with a monoester content ranging between 20% and 80% by weight of saccharose palmitate, advantageously 70%, with the balance being a mixture of di-, tri- and/or polyesters.

According to an embodiment, the surfactant SF4 is selected in the group consisting of sucrose stearate, preferably CAS number [25168-73-4] or [84066-95-5]; sucrose palmitate, preferably CAS [26446-38-8]; soy lecithin CAS [8002-43-5]; and mixtures thereof.

According to another specific embodiment, the first surfactant, in this case OIL SF3 or WATER SF3, or the second surfactant SF4 contain sucrose stearate or, advantageously, a mixture containing saccharose stearate and sucrose palmitate.

According to a specific embodiment, the first surfactant (OIL SF3) and/or (WATER SF3) or the second surfactant (SF4) is a mixture containing:
- between 20% and 80% by weight, advantageously 70% saccharose stearate with a monoester content ranging between 20% and 80% by weight of saccharose stearate, advantageously 70%, with the balance being a mixture of di-, tri- and/or polyesters; and
- between 20% and 80% by weight, advantageously 30% saccharose palmitate with a monoester content ranging between 20% and 80% by weight of saccharose palmitate, advantageously 70%, with the balance being a mixture of di-, tri- and/or polyesters.

According to a specific embodiment, the first surfactant OIL SF3 and/or WATER SF3 or the second surfactant SF4 is sucrose stearate (preferably CAS number [25168-73-4] or [84066-95-5]).

According to another specific embodiment, the first surfactant OIL SF3 or the second surfactant SF4 is sucrose palmitate, preferably CAS [26446-38-8].

According to another specific embodiment, the first surfactant OIL SF3 is sucrose stearate (preferably CAS number [84066-95-5] or [25168-73-4]) and the second surfactant SF4 is sucrose palmitate, preferably CAS number [26446-38-8] or the first surfactant OIL SF3 is sucrose palmitate and the second surfactant SF4 is sucrose stearate.

According to another specific embodiment, the first surfactant OIL SF3 is sucrose stearate (preferably CAS number [84066-95-5] or [25168-73-4]) or sucrose palmitate, preferably CAS number [26446-38-8] and the second surfactant SF4 is soy lecithin CAS [8002-43-5].

According to a specific embodiment, the first surfactant (SF3) represents between 0.2% and 10% of the composition by weight, and the second surfactant (SF4) represents between 0.01% and 5% of the composition by weight.

As mentioned above, in a specific embodiment, the composition contains at least one WATER SF3, at least one OIL SF3 and at least one SF4.

Advantageously, WATER SF3 is selected from the group of polyoxyethylene sorbitan esters, OIL SF3 is selected from the group of sorbitan esters and SF4 is selected from the group of natural surfactants.

In a preferred embodiment, WATER SF3 is polyethylene glycol sorbitan monooleate (Tween 80), OIL SF3 is sorbitan monolaurate (Span 20) and SF4 is soy lecithin (CAS [8002-43-5]).

In another embodiment, WATER SF3 is selected from the group of polyoxyethylene sorbitan esters, OIL SF3 is selected from the group of sorbitan esters and SF4 is selected from the group comprising fatty acid sugar esters.

In another preferred embodiment, WATER SF3 is Tween 20, OIL SF3 is Span 85 and SF4 is sucrose stearate (preferably CAS number [25168-73-4] or [84066-95-5]).

In another preferred embodiment, WATER SF3 is Tween 80, OIL SF3 is Span 20 and SF4 is sucrose stearate (preferably CAS number [25168-73-4] or [84066-95-5]).

According to a specific embodiment, the composition of the invention contains:
- a mixture comprising β-sitosterol, representing advantageously at least 30% of the mixture by weight, along with campesterol, stigmasterol and brassicasterol; and
- a surfactant (SF2) located at two different places respectively at the interface of the lipophilic droplets and of the aqueous phase and suspended in the aqueous phase under the form of particles insoluble in the aqueous phase, comprising saccharose stearate, advantageously a mixture containing saccharose stearate and saccharose palmitate.

According to another specific embodiment, the composition of the invention contains:
- a mixture of phytosterols corresponding to CAS number [949109-75-5] and
- a surfactant (SF2) located at two different places respectively at the interface of the lipophilic droplets and of the aqueous phase and suspended in the aqueous phase under the form of particles insoluble in the aqueous phase, which is sucrose stearate, as example CAS number [84066-95-5 or 25168-73-4].

According to a specific embodiment, the composition of the invention contains:
- a mixture comprising β-sitosterol, representing advantageously at least 30% of the mixture by weight, along with campesterol, stigmasterol and brassicasterol; and
- a first surfactant (OIL SF3) and/or a second surfactant (SF4) comprising saccharose stearate, advantageously a mixture containing saccharose stearate and saccharose palmitate.

According to a specific embodiment, the weight ratio of the mixture of phytosterols to the surfactant (SF2) or to the first surfactant (SF3) and second surfactant (SF2 or SF4) is between 0.01 and 15, and advantageously between 0.1 and 5.

According to a specific embodiment, the composition of the invention, whether being formulated under the form of an aqueous solution, an emulsion or a suspo-emulsion or any kind of formulation known by the one skilled in the art, also contains at least one component selected from among the group including:
- at least one fluidifying agent selected from among the group comprising glycerol, ethanol, propylene glycol, polyethylene glycol with an average molecular weight between 100, preferably between 200 and 8000 Da, advantageously between 200 and 1000 Da, preferably equal to 200 Da and more preferably equal to 400 Da; with the fluidifying agent advantageously representing between 1% and 15% of the composition by weight, and advantageously between 2% and 8%; and/or
- at least one solubilizing agent for phytosterols (or fatty substances) selected from among the group comprising lecithins, fatty alcohols as for example oleyl alcohol; fatty acids as for example oleic acid, linoleic acid ; glycerides, triglycerides, plant oils, advantageously soybean oil, grapeseed oil, sea buckthorn oil, corn oil, rapeseed oil or sunflower oil; with the solubilizing agent advantageously representing between 1% and 30% of the composition by weight, and advantageously between 3% and 10 %; and/or
- at least one wetting agent selected from among the group comprising silanes, siloxanes, triglycerides, a mixture of fatty acids, a mixture of fatty acid methyl esters, advantageously including methyl tetradecanoate, methyl hexadecanoate and methyl octadecanoate, or a mixture thereof with the wetting agent advantageously representing between 0.1% and 5% of the composition by weight; and/or
- at least one chelating agent, selected from among the group comprising natural chelating agents, advantageously sodium phytate or amino acid-based chelating agents; and synthetic chelating agents, advantageously 2,2'-bipyridine, dimercaptopropanol, ethylene glycol-bis(2-aminoethyl)-*N,N,N',N'*-tetraacetic acid (EGTA) or its salts, ethylenediaminetetraacetic acid (EDTA) or its salts, nitrilotriacetic acid, iminodiacetic acid, salicylic acid or triethanolamine, and preferably EDTA; with the chelating agent advantageously representing between 0.01% and 5% of the composition by weight; and/or
- at least one preservative, advantageously selected from among the group comprising benzyl alcohol, benzoic acid and its salts, especially sodium benzoate, dehydroacetic acid and its salts, especially sodium dehydroacetate, salicylic acid and its salts, sorbic acid and its salts, especially potassium sorbate, 2-phenylethanol, phenoxyethanol, phenylpropanol, and preferably benzyl alcohol; with the preservative advantageously representing between 0.01% and 5% of the composition by weight.
- at least one penetrating agent, advantageously selected from alkoxylated polyol esters, alkoxylated alcohols, polyoxyethylene sorbitan esters, polyoxyethylene alkylamines.
- at least one rheological modifier, advantageously selected from agar, xanthan gum, carrageenan, guar gum, alginates, polyacrylics, polyamides polyesters polymers and clays.
- at least one anti-drift adjuvant.
- at least one antioxidant, selected from the group comprising citric acid and its salts, tartaric acid and its salts, sodium lactate, potassium lactate, calcium lactate, lecithins, tocopherols, polyphenols, butylhydroxyanisole, dibutylhydroxytoluene, octyl gallate, dodecyl gallate, lycopene.

Of course, all the above components can display more properties that the main one cited above.

According to a specific embodiment, the composition of the invention advantageously comprises:
- 0.2% to 30% of the composition by weight of at least the first and second surfactant, which are preferably identical, advantageously saccharose stearate and even more advantageously saccharose stearate having CAS number [84066-95-5] or [25168-73-4];
- 0.2% to 10% of the composition by weight of a mixture of phytosterols containing β-sitosterol, with the β-sitosterol advantageously representing at least 30% of the mixture by weight, and the balance comprising a mixture of campesterol, stigmasterol and brassicasterol, with the overall mixture corresponding even more advantageously to CAS number [949109-75-5];

- 1% to 15% of the composition by weight of a fluidifying agent, advantageously polyethylene glycol with a number average molecular weight (Mn) between 200 and 8000 Da, advantageously between 200 and 1000 Da, and preferably equal to 400 Da; or a plant oil as mentioned previously;
- 0.1% to 5% of the composition by weight of a wetting agent, advantageously fatty acid methyl esters, preferably comprising methyl tetradecanoate, methyl octadecanoate and methyl hexadecanoate or a mixture thereof;
- 0.01% to 5% of the composition by weight of a preservative, advantageously benzyl alcohol;
- 0.01% to 5% of the composition by weight of a natural or synthetic chelating agent, advantageously as described previously, and preferably EDTA; and
- the balance being water (water QSP 100%).

According to another aspect, the invention relates to a slurry resulting from the dilution of the composition as previously described.

Advantageously, the viscosity of the slurry of the invention is less than or equal to 0.2 Pa·s (i.e., 200 cP), advantageously equal to or strictly higher than 10⁻³ Pa·s (i.e., 1 cP), and less than or equal to 0.1 Pa·s (i.e., 100 cP). In the context of the invention, the viscosity is measured using an Anton Paar QC300 viscometer, and the measurement is made at ambient temperature with the DG26 measurement system.

Advantageously, the pH of the slurry of the invention is between 5 and 8, preferably between 5 and 7, and is even more advantageously between 6 and 7.

According to a specific embodiment, the mixture of phytosterols and the surfactant(s) of the invention are combined with at least one active ingredient.

For the purposes of the invention, the term "active ingredient" refers to a product that allows the plant to combat preferably abiotic and/or biotic stresses, advantageously selected from the group comprising:
- a phytopharmaceutical product such as a plant growth regulator, a fungicide, a fungistatic agent, a bactericide, a bacteriostatic agent, an insecticide, an acaricide, a parasiticide, a nematicide, a talpicide or an herbicide;
- a biocontrol product based on natural mechanisms that enables plants to combat fungal infections, bacterial infections, viral infections, pest attacks and/or competition with weeds; and/or - a nutrient, organic or inorganic such as a micronutrient or a fertilizer.

Plant growth regulator may be selected from the group consisting of:
- Antiauxins: clofibric acid, 2,3,5-tri-iodobenzoic acid;
- Auxins: 4-CPA, 2,4-D, 2,4-DB, 2,4-DEP, dichlorprop, fenoprop, IAA (indole-3-acetic acid), IBA, naphthaleneacetamide, α-naphthaleneacetic acid, 1-naphthol, naphthoxyacetic acid, potassium naphthenate, sodium naphthenate, 2,4,5-T;
- Cytokinins: 2iP, 6-benzylaminopurine (6-BA), 2,6-dimethylpyridine, kinetin, zeatin;
- Defoliants: calcium cyanamide, dimethipin, endothal, merphos, metoxuron, pentachlorophenol, thidiazuron, tribufos, tributyl phosphorotrithioate;
- Ethylene modulators: aviglycine, 1-methylcyclopropene (1-MCP), prohexadione (prohexadione calcium), trinexapac (trinexapac-ethyl);
- Ethylene releasers: ACC, etacelasil, ethephon, glyoxime; Gibberellins: gibberelline, gibberellic acid;
- Growth inhibitors: abscisic acid, ancymidol, butralin, carbaryl, chlorphonium, chlorpropham, dikegulac, flumetralin, fluoridamid, fosamine, glyphosine, isopyrimol, jasmonic acid, maleic hydrazide, mepiquat (mepiquat chloride, mepiquat pentaborate), piproctanyl, prohydrojasmon, propham, 2,3,5-tri-iodobenzoic acid;
- Morphactins: chlorfluren, chlorflurenol, dichlorflurenol, flurenol;
- Growth retardants: chlormequat (chlormequat chloride), daminozide, flurprimidol, mefluidide, paclobutrazol, tetcyclacis, uniconazole, metconazole;
- Growth stimulators: brassinolide, forchlorfenuron, hymexazol;
- Unclassified plant growth regulators/classification unknown: amidochlor, benzofluor, buminafos, carvone, choline chloride, ciobutide, clofencet, cloxyfonac, cyanamide, cyclanilide, cycloheximide, cyprosulfamide, epocholeone, ethychlozate, ethylene, fenridazon, fluprimidol, fluthiacet, heptopargil, holosulf, inabenfide, karetazan, lead arsenate, methasulfocarb, pydanon, sintofen, triapenthenol.

Fungicides and fungistatics may be selected among the group:
- Respiration inhibitors:
   ∘ Inhibitors of complex III at Qo site like for example azoxystrobin, coumethoxystrobin, coumoxystrobin, dimoxystrobin, enestroburin, fenaminstrobin, fenoxystrobin/flufenoxystrobin, fluoxastrobin, kresoximmethyl, metominostrobin, orysastrobin, picoxystrobin, pyraclostrobin, pyrametostrobin, pyrao-xystrobin, trifloxystrobin, pyribencarb, triclopyricarb/chlorodincarb, famoxadone, fenamidone;
   ∘ inhibitors of complex III at Qi site: cyazofamid, amisulbrom;
   ∘ inhibitors of complex II: flutolanil, benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide;
   ∘ other respiration inhibitors (e.g. complex I, uncouplers): diflumetorim;
   ∘ nitrophenyl derivates: binapacryl, dinobuton, dinocap, fluazinam; ferimzone; organometal compounds: fentin-acetate, fentin chloride or fentin hydroxide; ametoctradin; and silthiofam;
- Sterol biosynthesis inhibitors (SBI fungicides):
   ∘ C14 demethylase inhibitors (DMI fungicides): triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole;
   ∘ imidazoles: imazalil, pefurazoate, prochloraz, triflumizol; pyrimidines, pyridines and piperazines: fenarimol, nuarimol, pyrifenox, triforine; Delta14-reductase inhibitors: aldimorph, dodemorph, dodemorph-acetate, fenpropimorph, tridemorph, fenpropidin, piperalin, spiroxamine; Inhibitors of 3-keto reductase: fenhexamid;
- Nucleic acid synthesis inhibitors:
   ∘ Phenylamides or acyl amino acid fungicides: benalaxyl, benalaxyl-M, kiral-axyl, metalaxyl, ofurace, oxadixyl;
   ∘ others: hymexazole, octhilinone, oxolinic acid, bupirimate, 5-fluorocytosine;
- Inhibitors of cell division and cytoskeleton:
   ∘ tubulin inhibitors: benzimidazoles, thiophanates: benomyl, carbendazim, fuberidazole, thiabendazole, thiophanate-methyl; triazolopyrimidines;
   ∘ cell division inhibitors: diethofencarb, ethaboxam, pencycuron, fluopicolide, zoxamide, metrafenone, pyriofenone;
- Inhibitors of amino acid and protein synthesis:
   ∘ methionine synthesis inhibitors (anilino-pyrimidines): cyprodinil, mepanipyrim, pyrimethanil;
   ∘ protein synthesis inhibitors: blasticidin-S, kasugamycin, kasugamycin hydrochloride-hydrate, mildiomycin, streptomycin, oxytetracyclin, polyoxine, validamycin A;
- Signal transduction inhibitors:
   ∘ MAP/histidine kinase inhibitors: fluoroimid, iprodione, procymidone, vinclozolin, fenpiclonil, fludioxonil; G protein inhibitors: quinoxyfen;
- Lipid and membrane synthesis inhibitors:
   ∘ Phospholipid biosynthesis inhibitors: edifenphos, iprobenfos, pyrazophos, isoprothiolane; lipid peroxidation: dicloran, quintozene, tecnazene, tolclofosmethyl, biphenyl, chloroneb, etridiazole; phospholipid biosynthesis and cell wall deposition: dimethomorph, flumorph, mandipropamid, pyrimorph, benthiavalicarb, iprovalicarb, valifenalate;
   ∘ compounds affecting cell membrane permeability and fatty acid: propamocarb, propamocarb-hydrochloridfatty acid amide;
- Inhibitors with Multi Site Action:
   ∘ Inorganic active substances: Bordeaux mixture, copper acetate, copper hydroxide, copper oxychloride, basic copper sulfate, sulfur;
   ∘ thio- and dithiocarbamates: ferbam, mancozeb, maneb, metam, metiram, propineb, thiram, zineb, ziram;
   ∘ organochlorine compounds (e.g. phthalimides, sulfamides, chloronitriles): anilazine, chlorothalonil, captafol, captan, folpet, dichlofluanid, dichlorophen, hexachlorobenzene, pentachlorphenole and its salts, phthalide, tolylfluanid;
   ∘ others: guanidine, dodine, dodine free base, guazatine, guazatine-acetate, iminoctadine, iminoctadine-triacetate, iminoctadinetris(albesilate), dithianon;
- Cell wall synthesis inhibitors:
   ∘ Inhibitors of glucan synthesis: validamycin, polyoxin B;
   ∘ melanin synthesis inhibitors: pyroquilon, tricyclazole, carpropamid, dicyclomet, fenoxanil;
- Plant defense inducers:
   ∘ acibenzolar-S-methyl, probenazole, isotianil, tiadinil, prohexadione-calcium;
   ∘ phosphonates: fosetyl, fosetyl-aluminum, phosphorous acid and its salts;
- Other mode of action:
   ∘ bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxine-copper, picarbutrazox, proquinazid, tebufloquin, tecloftalam, triazoxide.

Insecticidal compounds may be selected from the group consisting of:
- Acetylcholine esterase inhibitors from the class of carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, and triazamate;
- Acetylcholine esterase inhibitors from the class of organophosphates: acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothio-phosphoryl)salicylate, isoxathion, malathion, mecarbam, methamidophos, methidathion, mevinphos, monocrotophos, nalad, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
- GABA-gated chloride channel antagonists:
- Cyclodiene organochlorine compounds: endosulfan; or M-2.B fiproles (phenylpyrazoles): ethiprole, fipronil, flufiprole, pyrafluprole, or pyriprole;
- Sodium channel modulators from the class of pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, betacyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, momfluorothrin, empenthrin, esfenvalerate, etofenprox, fenpropathrin, fenvalerate, flucythrinate, flumethrin, tau-fluvalinate, halfenprox, imiprothrin, meperfluthrin,metofluthrin, permethrin, phenothrin, prallethrin, profluthrin, pyrethrin (pyrethrum), resmethrin, silafluofen, tefluthrin, tetramethylfluthrin, tetramethrin, tralomethrin, transfluthrin, DDT and methoxychlor;
- Nicotinic acteylcholine receptor agonists from the class of neonicotinoids: acteamiprid, chlothianidin, cycloxaprid, dinotefuran, flupyradifurone, imidacloprid, nitenpyram, sulfoxaflor, thiacloprid, thiamethoxam;
- Allosteric nicotinic acteylcholine receptor activators from the class of spinosyns: spinosad, spinetoram;
- Chloride channel activators from the class of mectins: abamectin, emamectin benzoate, ivermectin, lepimectin or milbemectin;
- Juvenile hormone mimics: hydroprene, kinoprene, methoprene, fenoxycarb or pyriproxyfen;
- Non-specific multi-site inhibitors: methyl bromide and other alkyl halides, chloropicrin, sulfuryl fluoride, borax or tartar emetic;
- Selective homopteran feeding blockers: pymetrozine, flonicamid, pyrifluquinazon,
- Mite growth inhibitors: clofentezine, hexythiazox, diflovidazin or etoxazole;
- Inhibitors of mitochondrial ATP synthase: diafenthiuron, azocyclotin, cyhexatin, fenbutatin oxide, propargite, or tetradifon;
- Uncouplers of oxidative phosphorylation: chlorfenapyr, DNOC, or sulfluramid; M-13 nicotinic acetylcholine receptor channel blockers: bensultap, cartap hydrochloride, thiocyclam, thiosultap sodium;
- Inhibitors of the chitin biosynthesis type 0 (benzoylurea class): bistrifluron, chlorfluazuron, diflubenzuron, flucycloxuron, flufenoxuron, hexaflumuron, lufenuron, novaluron, noviflumuron, teflubenzuron, triflumuron;
- Inhibitors of the chitin biosynthesis type 1: buprofezin;
- Moulting disruptors: cyromazine;
- Ecdyson receptor agonists: methoxyfenozide, tebufenozide, halofenozide, fufenozide or chromafenozide;
- Octopamin receptor agonists: amitraz;
- Mitochondrial complex III electron transport inhibitors: hydramethylnon, acequinocyl, flometoquin, fluacrypyrim or pyriminostrobin;
- Mitochondrial complex I electron transport inhibitors: fenazaquin, fenpyroximate, pyrimidifen, pyridaben, tebufenpyrad, tolfenpyrad, flufenerim, or rotenone;
- Voltage-dependent sodium channel blockers: indoxacarb, metaflumizone
- Inhibitors of the lipid synthesis, inhibitors of acetyl CoA carboxylase: spirodiclofen, spiromesifen or spirotetramat;
- Mitochondrial complex II electron transport inhibitors: cyenopyrafen, cyflumetofen or pyflubumide; and
- Ryanodine receptor-modulators from the class of diamides: flubendiamide, chloranthraniliprole (rynaxypyr), cyanthraniliprole (cyazypyr),
- Others: afidopyropen.

The traditional treatment of cultivated plants consists in applying active ingredients (a phytopharmaceutical product and/or a biocontrol product and/or a nutrient) to the cultivated plant in particular, where they provide an effect by the sole means of an interaction with the surface of the plant. Given the protective role played by the cuticle, they undergo little or no penetration into the plant by means of passive diffusion.

Unexpectedly, the Applicant has noted that when the combination of phytosterols and of surfactants of the invention is combined with at least one active ingredient, this facilitates the diffusion and passive penetration of the active ingredient into the plant cell by means of the cuticle and plant cell membrane passage mechanisms which were described previously. The composition or the slurry described in the invention therefore allows the presence of a higher concentration or quantity of active ingredient in the plant. On condition that the composition or slurry is applied preferably prior to the onset of the stress, a systemic action of the active ingredient in the plant is observed, leading in turn to an enhanced fight against biotic stresses. In addition, the composition or slurry makes it possible to decrease the doses of active ingredients used while guaranteeing the improved effectiveness of these active ingredients.

The invention relates to the composition above disclosed, said composition containing at least one active ingredient as above mentioned.

Another object of the invention is also an agricultural kit containing separately the composition of the invention (before dilution) and at least one active ingredient as described above.

In use, the composition of the invention may be mixed by the farmer with an effective amount of the active ingredient and then diluted in order to obtain a slurry which is applied on the plant.

Another option is to dilute the composition of the invention in order to obtain the slurry and only then, to add to the slurry the at least one active ingredient.

In another aspect, the invention relates to a method of manufacture for the previously described multiphase composition that is composed of the following steps:
a) preparation of the lipophilic phase comprising heating the mixture of phytosterols;
b) simultaneously with step a) or before step a), preparation of the aqueous phase comprising heating said aqueous phase;
c) simultaneously, addition of the surfactant SF2 located at the interface of the lipophilic droplets and of the aqueous phase to the lipophilic phase of step a) and/or to the aqueous phase b);
d) mixing and stirring of the lipophilic phase with of the aqueous phase until an emulsion is obtained;
e) cooling of the emulsion;
f) addition of the surfactant SF2 suspended in the aqueous phase to the emulsion thus obtained under stirring, preferably at ambient temperature of between 20 °C and 25 °C, until a homogeneous suspension of the solid particles in the aqueous phase is obtained.

In another aspect, the invention relates to a method of manufacture for the previously described multiphase composition that is composed of the following steps:
a) preparation of the lipophilic phase comprising heating the mixture of phytosterols;
b) simultaneously with step a) or before step a), preparation of the aqueous phase comprising heating said aqueous phase;
c) simultaneously, addition of the first surfactant OIL SF3 to the lipophilic phase of step a) and/or addition of the first surfactant WATER SF3 to the aqueous phase b);
d) mixing and stirring of the lipophilic phase with of the aqueous phase until an emulsion is obtained;
e) cooling of the emulsion;
f) addition of the second surfactant SF4 to the emulsion thus obtained under stirring, preferably at ambient temperature of between 20 °C and 25 °C, until a homogeneous suspension of the solid particles in the aqueous phase is obtained.

When present, a fluidifying agent, a solubilizing agent, and advantageously a wetting agent are added to the lipophilic phase and, where necessary, a chelating agent, a preservative, and/or an antioxidant are added to the aqueous phase.

In some embodiments, wetting agent may be used in the water phase and antioxidant may be added in the oil phase.

According to a specific embodiment, the fluidifying agent is polyethylene glycol, and advantageously polyethylene glycol with a molar mass of 200 or 400 g/mol.

According to a specific embodiment, the wetting agent is a mixture of fatty acid methyl esters, preferably comprising methyl tetradecanoate, methyl octadecanoate and methyl hexadecanoate.

In practice,
- preparation of the lipophilic phase is conducted at a high-temperature, preferably in a range between about 70 °C to about 140 °C, preferably between about 90 °C to about 120 °C, more preferably about 110 °C;
- preparation of the aqueous phase is conducted at a high-temperature, preferably in a range between about 50 °C to about 90 °C, preferably between about 70 °C to about 90 °C, more preferably about 80 °C;
- stirring is conducted until an emulsion of lipophilic droplets is obtained, preferably at least 90% of said lipophilic droplets having a diameter comprised between 0.01 and 70 µm, preferably between 0.1 and 50 µm, most preferably between 0.1 and 20 µm with a peak maximum less than 10 µm, advantageously between 0.5 to 7 µm, preferably between 2 and 6 µm as determined by laser diffraction,
- cooling of the emulsion is conducted until temperature of between 20 °C and 30 °C, preferably between 20 °C and 25 °C is reached,
- addition of the second surfactant SF2 to the emulsion is conducted until a homogeneous suspension of the solid particles in the aqueous phase is obtained, preferably at least 90% of the particles have a diameter comprised between 1 and 1000 µm, advantageously between 10 and 250 µm with a peak maximum preferably of between 10 µm and 100 µm as determined by laser diffraction.

The invention also relates to a composition obtainable by the above-mentioned processes.

According to another aspect, the invention relates to the use of the composition or slurry described previously in order to save the water used in irrigation of a field cultivated-crop exposed to at least one abiotic stress, in particular a drought stress , a thermal stress or a thermal stress preceded or followed by a drought stress .

Advantageously, within the meaning of the invention, the plant is cultivated in fields or under controlled conditions, for example using hydroponics, in a pot or in a greenhouse; preferably, in the context of the invention, the plant is cultivated in a field.

The fact that the compounds of the invention are not products that perform a specific type of activity, such as fungicides or biocides, makes it possible to consider an extensive spectrum of uses for a wide variety of crops, which can in particular improve the protection and therefore the profitability of minor crops for which the number of available phytopharmaceutical products is almost zero.

The Applicant has noted that the composition was especially efficient for this specific effect on plants chosen from the group of soybean, corn, spring wheat, winter wheat, sunflower, spring barley, winter barley, millet, rapeseed, sorghum and cotton.

In practice, in step a) of the method of the invention, the composition or slurry of the invention is applied by spraying the leaves, by sprinkling, irrigation, drip irrigation or gravity irrigation of the cultivated plant, by incorporation into the soil, by addition to a hydroponic crop medium or by immersion, or any combination of these application methods.

Advantageously, the composition is applied to the cultivated plant by foliar spraying at a dose of composition ranging from 0.1 L/ha (hectare) to 15 L/ha, preferably 1 L/ha to 5 L/ha. Practically, the required dose of the composition is diluted in water in order to obtain a slurry. The slurry is then applied on the plant at a volume of between 30 and 400 L/ha, advantageously between 50 and 200 L/ha.

In a specific embodiment, the composition contains 2.5% by weight of phytosterols and the required dose of composition ranges from 1 L/ha to 5 L/ha. This means that the dose of phytosterols which is applied on the plant is between 25 to 125 g/ha. Practically, the composition of the invention may not be applied directly on the plant and needs to be diluted to form a slurry. In the present embodiment, the slurry is applied on the plant, especially by foliar spraying at a volume of 50 to 200 L/ha.

The slurry is preferably applied during a stage when the plant leaves cover the soil.

Advantageously, the slurry of the invention is applied only once by foliar spraying and/or irrigation.

The invention also relates to the use of the composition or slurry as described previously to improve the yield or dry matter production of a cultivated plant.

The invention also relates to the use of the composition or slurry as described previously to promote deeper root development for a cultivated plant.

The invention also relates to the use of the composition or slurry as described previously to control the opening or closing of the stomata of a cultivated plant.

The invention also relates to the use of the composition or slurry as described previously to improve the vegetative development and/or the flowering of a cultivated plant.

The invention also relates to the use of the composition or slurry as described previously to improve the water management of a crop when exposed to various abiotic stresses.

The composition, the slurry, the method of manufacture of the composition of the invention, the treatment process for managing water, as well as the uses previously described, present the advantages of corresponding exactly to societal demands relating to phytopharmaceutical products:
- Can be applied in the field and present a phytosterol concentration that is effective for stimulating crop plant growth and coping with an abiotic and/or biotic stress;
- Environmentally friendly;
- Safe for human health;
- Wide array of uses in terms of crop plant varieties;
- No induced resistance;
- Improved environmental conditions;
- Economic merit;
- Regulatory merit.

The invention and the benefits it provides are more visible in the following figures and examples, which are given in order to illustrate the invention in a non-exhaustive fashion.

### BRIEF DESCRIPTION OF THE FIGURES

Figure 1: stress diagram (thermal and/or drought stresses)
Figure 2: particle size distribution of the composition of the invention
Figure 3: microscope photograph of the composition of the invention
Figure 4: evolution of available water (black curve), natural or human irrigation (black histogram, for the treated modality only) and temperature profile (grey curve) with days, with an indication of the temperature threshold (grey dashed line), the wilting point (black dotted line), the three run of irrigation (black stars) for the control modality and the three periods of thermal stress (B) or drought stress (A and C).
Figure 5: temperature profile for the multi-stress experiment conducted in examples 3 (wheat) and 4 (sunflower), along with the two zones where the slopes were evaluated.
Figure 6: evolution with time of the available water (black curve) showing the wilting point (horizontal dotted line), the day of foliar spraying (vertical line), the rainfalls (black histograms) and the irrigations (grey histograms).

### EXAMPLES OF APPLICATION OF THE INVENTION

### 1. Preparation of the compositions according to the invention

### 1.1. Not exhaustive examples

Formulations according to the invention are described in Table 1. Any percentage by weight of a compound or a molecule of the invention refers to the total weight of the said invention, which means relative to the sum of all ingredients giving a hundred. This percentage by weight can by symbolized as wt%.

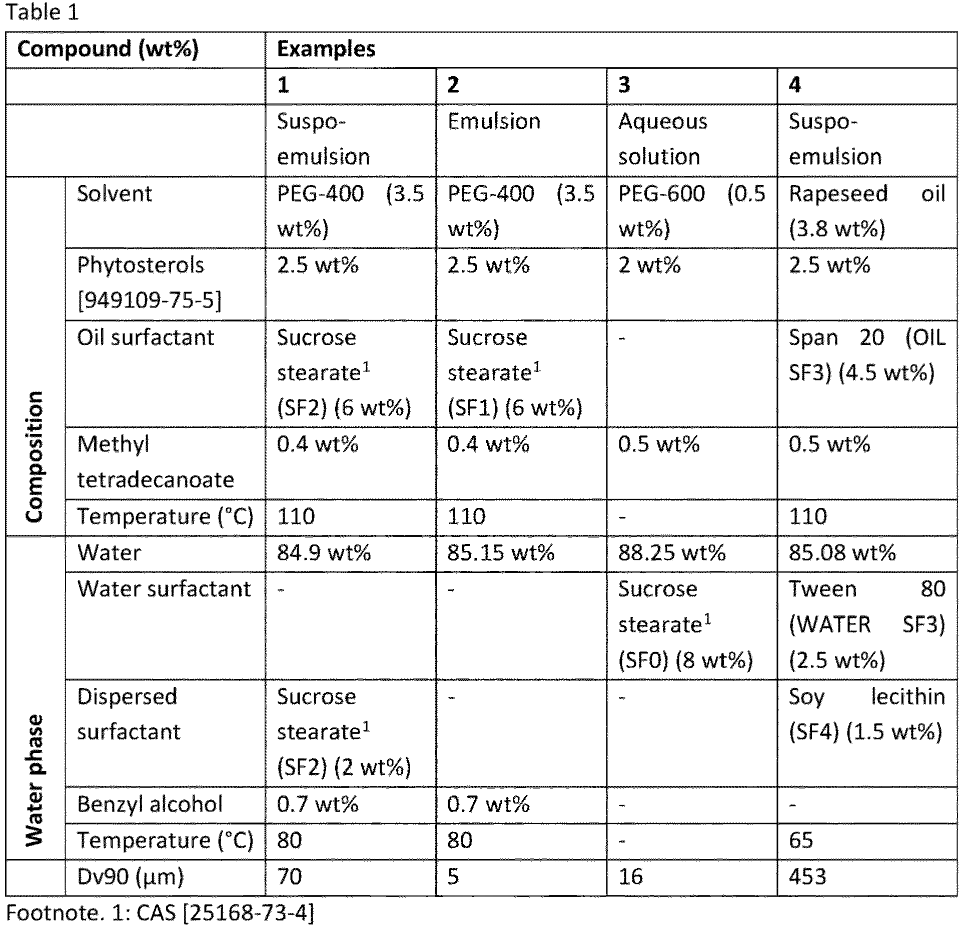

### 1.2. Manufacture of a composition:

### 1.2.1. Emulsion and suspo-emulsion

The various composition according to the invention are manufactured comprising the following steps:
(i) Preparation at about 110 °C of a lipophilic phase comprising phytosterols, surfactant SF1, SF2 or OIL SF3, methyl tetradecanoate and solvent,
(ii) Preparation at a given temperature of a hydrophilic phase comprising water, surfactant SF1, SF2 or WATER SF3, and benzyl alcohol if any,
(iii) Mixing the lipophilic phase of step (i) with the hydrophilic phase of step (ii) and stirring until at least 90% of the volume of lipophilic droplets with a diameter comprised between 0.1 and 20 µm are obtained, with a maximum peak between 2 and 6 µm as determined by laser diffraction,
(iv) Cooling of the emulsion to ambient temperature of about 20 °C, and
(v) If going further to the suspo-emulsion: adding a surfactant SF2 or SF4 in the emulsion, at ambient temperature of about 20 °C and stirring until at least 90% of the particles with a diameter comprised between 10 and 250 µm are obtained and suspended in the aqueous phase, with a maximum peak between 10 µm and 1000 µm as determined by laser diffraction.

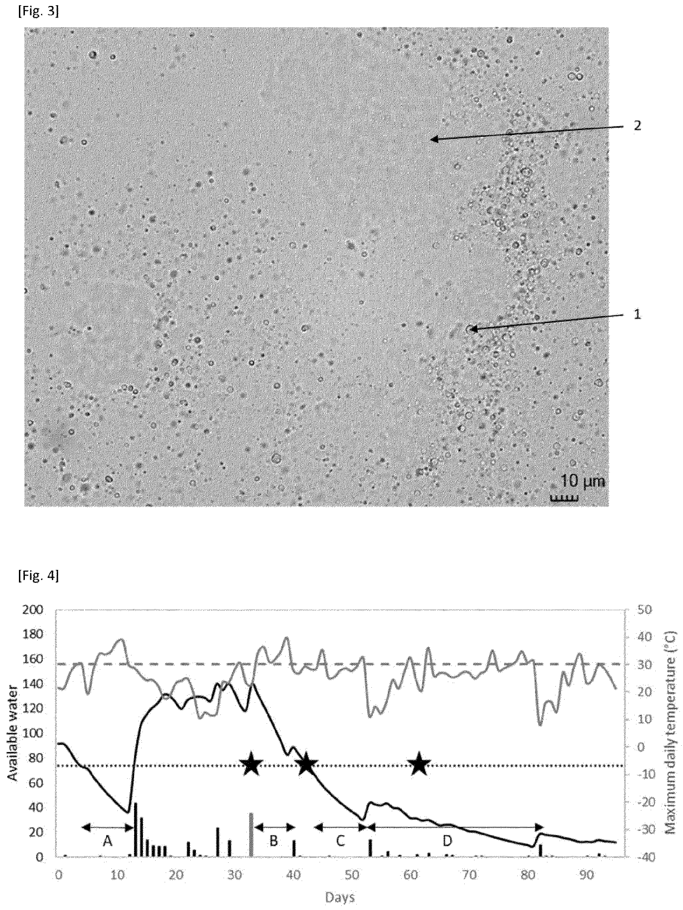

The particle size distribution and a microscope photograph of the example 1 from Table 1 are shown respectively on figures 2 and 3.

As shown on figure 2:
- at least 90% of lipophilic droplets dispersed in the aqueous phase have a diameter comprised between 0.1 and 20 µm, with a peak maximum between 2 and 6 µm, as determined by laser diffraction,
- at least 90% the dispersed surfactant (SF2) is in the form of particles that have diameter comprised between 10 and 250 µm with a peak maximum preferably of between 10 µm and 100 µm as determined by laser diffraction.

As shown on figure 3, particles of the dispersed surfactant (SF2) designated by 1 are much bigger than the lipophilic droplets designated by 2.

### 1.2.2. Aqueous solution

The various composition according to the invention are manufactured comprising the following steps:
(i) The phytosterols and surfactant SF0 are grinded to reach suitable particle distribution.
(ii) The phytosterols and surfactant SF0 are dispersed in water and the composition is sufficiently stirred until a homogenous composition is reached.

### 2. Evaluation of the capacity of the slurry of the invention to improve the water saving of corn under reduced irrigation, with cultivation in wide strips

### 2.1. Equipment and methods

### 2.1.1. Description of the experimental setup

The description of the experimental setup is presented in Table 2. The composition of the invention used in this example is the formulation 1 exemplified in Table 1, example 1.

**Table 2**

| | |
|---|---|
| **Crop (variety)** | Grain corn (DKC 5065) |
| **Sowing density** | 100,000 grains/ha |
| **Setup** | Wide strips (0.105 ha) for the untreated (control) modality; and Wide strips (0.105 ha) for the modality treated with the slurry as per example 1 |
| **Type of soil and useful water reserve** | Silty-sandy soil. Useful water reserve of 140 mm. |

### 2.1.2. Modalities considered

The description of the modalities considered is presented in Table 3.

**Table 3**

| **Modality** | **Treatment** | **Application dose of the formulation 1 as per example 1** | **Application stage** |
|---|---|---|---|
| **Control** | Untreated Control | - | - |
| **Treated** | Formulation 1 according to example 1 | 1 L/ha | 12 leaves stage on day 0 |

The slurry is obtained by diluting the formulation 1 of example 1 in water and is applied only once, by foliar spraying, at a volume of 80 L/ha under the following conditions: temperature of 20 °C, relative humidity of 60% and wind < 10 km/h.

After the modalities have been prepared, irrigation was performed at a standard level (125 mm) or at a reduced level (35 mm), according to the sequence described in Table 4.

**Table 4**

| **Sequence** | #1 (day 33) | #2 (day 43) | #3 (day 61) |
|---|---|---|---|
| **Irrigated** | 35 mm | 50 mm | 40 mm |
| **Not irrigated** | 35 mm | - | - |
| **Rainfalls** | 232 mm | | |

### 2.2. Results

A water balance carried out between sowing and harvesting of the crop shows the following elements. A high drought stress was observed (62 days below the wilting point in two different periods, one after treatment and the other at maturity, a total of 232 mm of rainfalls during the studied period). The presence of a repetition of high-temperature stress (24 days with maximum temperature > 30 °C) and the absence of rainfall (drought stress) resulted in a very high evapotranspiration demand (> 6 mm) over a long period which penalized yield elaboration.

Figure 4 summarizes the evolution of the available water (black scale) and air maximum temperature (gray scale) starting from the day of foliar spray of the composition of the invention according to example 1. On this figure are also highlighted the wilting point (black dotted line), the threshold temperature (dashed grey line) and the three successive runs of irrigation for the control (black stars), the treated modality having only the first run of irrigation on day 33.

Comparing these data show that the control and treated modalities have been exposed to this sequence of stresses:
- A: hydric stress,
- B: thermal stress,
- C: hydric stress,
- D: hydric stress including sub-sequences of thermal stress.

The results of the yield obtained after harvest are presented in Table 5.

**Table 5**

| **Modality** | **Yield (t/ha)** |
|---|---|
| Untreated, no stress | 10.1 |
| Untreated, stressed | 9 |
| Treated, stressed | 10.2 |

### 2.3. Conclusion

This trial shows that when the slurry of the invention is applied to corn at an early stage of development (12 leaves stage) and a farmer-scheduled, reduced water supply of 72% is performed, the yield is stabilized compared to the yield obtained for the untreated plants, which is not the case when the plant was both untreated and not irrigated, all these modalities being exposed to multiple periods of abiotic stress.

### 3. Successive thermal stress sequences on winter wheat (application at first node) and evaluation of the capacity of the composition of the invention to reduce the quantity of water uptake while preserving phenotypic values

The main objective was to investigate the ability of slurries prepared from two compositions of the invention (i.e., formulations 1 and 2 of example 1), to grant water management to winter wheat grown in greenhouse. The following modalities were considered:
- Non-treated, irrigated modality,
- Non-treated, non-irrigated modality,
- A modality treated with a slurry which is composed from a dilution of the formulation 1 of example 1,
- A modality treated with a slurry which is composed from a dilution of the formulation 2 of example 1.

### 3.1. Equipment and methods

### 3.1.1. Description of the experimental setup

The description of the experimental setup is presented in Table 6.

**Table 6**

| | |
|---|---|
| **Crop (variety)** | Wheat, variety ULTIM |
| **Sowing density** | 10 seeds per grow pot |
| **Setup** | Greenhouse |
| **Type of soil** | Mixture of Bretenière soil and potting soil |

### 3.1.2. Modalities considered

The description of the modalities considered is presented in Table 7.

**Table 7**

| **Modality** | **Treatment** | **Application dose of the composition** | **Application stage** |
|---|---|---|---|
| **Control** | Untreated and Irrigated Control (UIC) | - | - |
| **Stressed** | Untreated and Stressed Control (USC) | - | - |
| **Treated** | Formulation 1 according to example 1 | 1 L/ha | First node |
| **Treated** | Formulation 2 according to example 2 | 1 L/ha | First node |

The slurry is obtained by diluting formulation 1 of example 1 or formulation 2 of example 1 in water at a volume of 1 L/ha and is applied only once, by foliar spraying. Stress is applied sequentially the following days after treatment, and re-watering is performed at the wilting point for each modality. A minimum of irrigation is ensured according to the phenotype of the plant. All modalities are subjected to the same pattern of thermal stress.

### 3.1.3. Data collection method

In the experiment, several capacitive probes (Watchdog) were installed for each modality to dynamically monitor the evolution of water content in the grow pot over the course of two months. A temperature probe was installed in the greenhouse, a few decametres above the canopy of the plants.

Data from the Watchdog probes and temperature were aligned with time. The water consumption was calculated as the difference of the Watchdog probe values between to and to-15 min, giving a negative slope value when water is consumed, no slope when no water is consumed over this period, and positive slope when rewatering is performed. These negative values were temporally aligned with the recorded temperature and two ROIs were defined: one at low temperature (19 → 24 °C, nominal mode 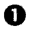 ), and the other one at temperatures of thermal stress (32 → 46 °C, mode 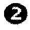 ). ultimately, two working regimes were defined: one where the plant has a low water consumption regime (i.e., no or weak negative slope), the other where the plant has an intensive water regime (i.e., important negative slope).

### 3.2. Results

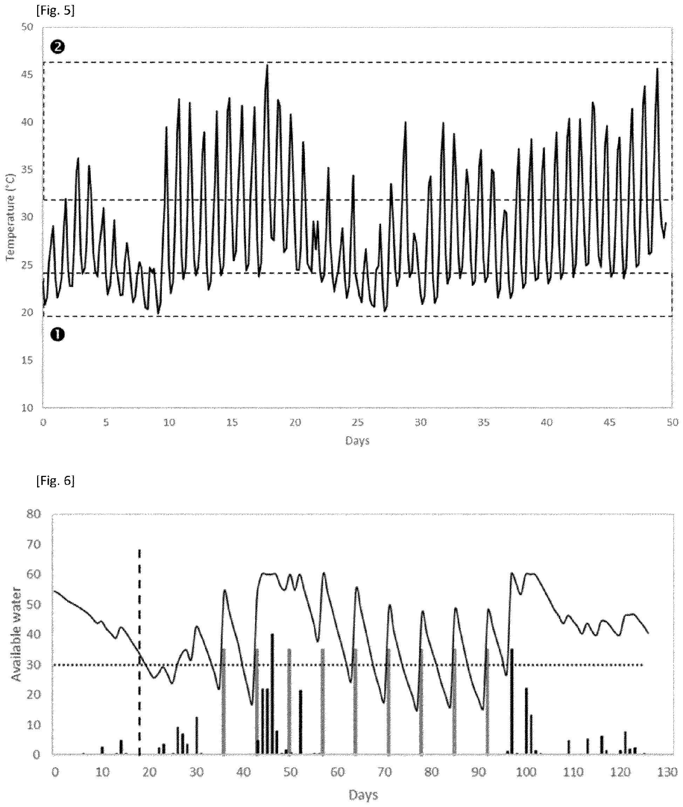

Figure 5 shows the temperature pattern whose plants have been exposed, starting from the day of application of the product, when any, until harvest and determination of the yields.

The water consumption regime of wheat is given in Table 8.

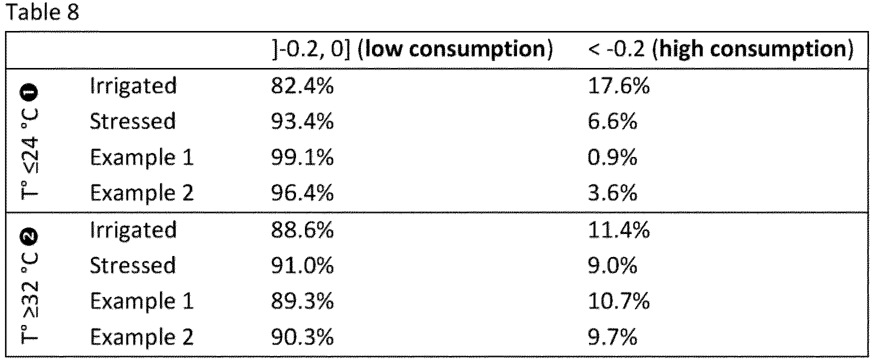

- **Normal mode (mode** 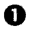 **).** It is seen from Table 8 that the water consumption regimes for the plants which have been treated either with formulation 1 or 2 from example 1 of the invention evolve in a consumption regime which is lower than any other modality (99.1% and 96.4%, against 82.4% and 93.4%), showing therefore that they preserve available water. Irrigated modality can consume water since it is supplied with enough water.
- **High-temperature stress (mode** 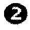 **).** It is also seen from Table 8 that the stressed modality starts consuming more water (increase of high consumption rate) than during the nominal regime so as to reduce the adverse effect of high temperatures leading to thermal stress. The effect is even more pronounced for the modalities which have been treated with any the of the slurries of the invention. Here in the presence of high temperatures, they even consume more water than the stressed modality, showing a reverse behavior compared with low temperature regime.

At the end of the experiments the different wheat modalities were harvested and analyzed. The results are given in Table 9. The letters in parenthesis show the statistical differences according to variance test (α = 5%).

**Table 9**

| | | Irrigated control | Stressed control | Slurry of example 1 (formulation 1) | Slurry of example 1 (formulation 2) |
|---|---|---|---|---|---|
| Fresh weight (g) | Aerial | 51.4 (a) | 21.4 (c) | 30.7 (b) | 27.0 (b) |
| | Roots | 19.7 (a) | 12.6 (c) | 14.8 (b) | 14.7 (b) |
| Dry weight (g) | Aerial | 14.6 (a) | 10.7 (c) | 11.4 (b) | 11.1 (bc) |
| | Roots | 9.29 (a) | 8.80 (a) | 8.79 (a) | 8.74 (a) |
| Cumulated water supply (relative to irrigated) | | 100% | 37% | 50% | 41% |

| | | | | | |
|---|---|---|---|---|---|
| **Fresh weight.** The irrigated modality gave the best performances in terms of fresh weight, followed by the two tested slurries prepared from composition of the invention. The stressed control gave lower performances. **Dry weight.** For the aerial part of the plants, the irrigated modality gave the best performances in terms of fresh weight, followed by the slurry prepared from the formulation 1 of the example 1 of the invention, then the slurry prepared from the formulation 2 of the example 1 of the invention. The stressed control afforded the lower performances. **Cumulated humidity.** As shown in Table 9, the cumulated humidity has been calculated relatively to the irrigated modality. All other modalities received approximately half the water quantity, and when exposed to multi-stresses, both plants treated with slurry prepared from the composition 1 or 2 of the example 1 of the invention, retained phenotypic features. | | | | | |

### 4. Successive thermal and hydric stress sequences on sunflower (application 3 weeks after seedling) and evaluation of the capacity of the composition of the invention to reduce the quantity of water uptake while preserving phenotypic values

The main objective was to investigate the ability of slurries prepared from two compositions of the invention to grant water management to sunflower grown in greenhouse. These modalities were considered:
- Non-treated, irrigated modality,
- Non-treated, non-irrigated modality,
- A modality treated with a slurry which is composed from a dilution of formulation 1 of example 1,
- A modality treated with a slurry which is composed from a dilution of formulation 2 of the example 1.

### 4.1.1. Data collection method

The description of the experimental setup is presented in Table 10.

**Table 10**

| | |
|---|---|
| **Crop (variety)** | Sunflower, variety FLAVIO |
| **Setup** | Greenhouse |
| **Type of soil** | Mixture of Bretenière soil and potting soil |

### 4.1.2. Modalities

The description of the modalities considered is presented in Table 11.

**Table 11**

| **Modality** | **Treatment** | **Application dose of the composition** | **Application stage** |
|---|---|---|---|
| **Control** | Untreated and Irrigated Control (UIC) | - | - |
| **Stressed** | Untreated and Stressed Control (USC) | - | - |
| **Treated** | Formulation 1 according to example 1 | 1 L/ha | 3 weeks after seedling |
| **Treated** | Formulation 2 according to example 1 | 1 L/ha | 3 weeks after seedling |

The slurry is obtained by diluting formulation 1 or formulation 2 of example 1 in water at a volume of 1 L/ha and is applied only once, by foliar spraying. Stress is applied sequentially the following days after treatment, and re-watering is performed at the wilting point for each modality. A minimum of irrigation is ensured according to the phenotype of the plant. All modalities are subjected to the same pattern of thermal stress.

### 4.1.3. Data collection method

The data collection method is identical is those described in section 3.1.3.

The same regimes 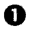 and 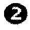 were considered.

### 4.2. Results

The water consumption slopes of the four sunflower modalities in the two different regimes are summarized in Table 12.

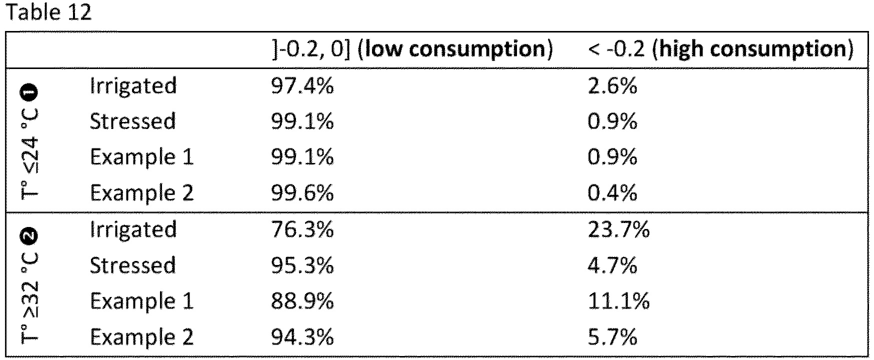

- **Normal mode (mode** 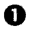 **).** It is seen from Table 12 that the water consumption regimes for the plants which have been treated either with formulation 1 or formulation 2 of example 1 of the invention evolve in a consumption regime which is of the same range as the stressed modality. Irrigated modality can consume water since it is supplied with enough water.
- **High-temperature stress (mode** 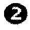 **).** It is also seen from Table 12 that the stressed modality starts consuming more water (increase of high consumption rate) than during the nominal regime so as to reduce the adverse effect of high temperatures leading to thermal stress. The effect is even more pronounced for the modalities which have been treated with any the of the slurries of the invention. Here in the presence of high temperatures, they even consume more water than the stressed modality, showing a reverse behavior compared with low temperature regime. This effect is particularly pronounced for the slurry obtained from a dilution of formulation 1 of example 1, with a high consumption mode of 11.1%.

At the end of the experiments the sunflowers were harvested and analyzed. The results are given in Table 13. The letters in parenthesis show the statistical differences according to variance test (α = 5%).

**Table 13**

| | | **Irrigated control** | **Stressed control** | **Slurry of example 1 (formulation 1)** | **Slurry of example 1 (formulation 2)** |
|---|---|---|---|---|---|
| **Foliar surface (cm²)** | **Day 16** | 52.0 (a) | 41.2 (b) | 47.1 (ab) | 43.8 (b) |
| | **Day 30** | 401.7 (a) | 305.0 (c) | 382.3 (ab) | 349.3 (b) |
| | **Day 44** | 1108.8 (a) | 555.9 (c) | 666.5 (b) | 580.3 (c) |
| | **Day 58** | 1491.2 (a) | 568.1 (d) | 669.6 (b) | 609.5 (c) |
| | **Day 65** | 1617.2 (a) | 622.6 (c) | 758.7 (b) | 717.8 (b) |
| **Fresh biomass (g)** | **Stem** | 76.4 (a) | 32.3 (c) | 39.5 (b) | 37.6 (b) |
| | **Roots** | 24.4 (a) | 14.3 (c) | 15.9 (b) | 15.2 (bc) |
| | **Flowers** | 49.3 (a) | 20.4 (c) | 27.1 (b) | 20.8 (c) |
| | **Stem** + **flowers** | 125.7 (a) | 52.7 (d) | 66.6 (b) | 54.4 (c) |
| **Length (cm)** | **Plant** | 129.2 (a) | 87.5 (c) | 93.0 (b) | 92.2 (b) |
| | **Root** | 59.0 (b) | 30.7 (c) | 81.0 (a) | 79.8 (a) |
| **Cumulated water supply (relative to irrigated)** | | 100% | 49% | 50% | 48% |

| | | | | | |
|---|---|---|---|---|---|
| **Foliar surface**. Before spray application (day 16), all the modalities display the same trend of foliar surface. After application, the total foliar surface increases in favor to the modalities Irrigated, slurry of formulation 1 and slurry of formulation 2 of example 1. Focusing to plants exposed to multi-stresses only, the slurry of formulation 1 of example 1 (suspo-emulsion) provides a better foliar surface than the slurry of formulation 2 of example 1 (emulsion), followed then by the non-treated, stressed control. **Aerial biomass**. In the plants that have been exposed to multi-stresses, the best results were observed for the formulation 1 of example 1, followed by the formulation 2 of example 1, and finally the non-treated plant. **Plant length**. In the plants that have been exposed to multi-stresses, the non-treated plant are statistically smaller than the others. **Root length**. The length of the main root revealed to be the longer for both treated modalities, even longer than the irrigated modality. As expected, the non-treated plants display the shortest main roots. **Cumulated humidity**. As shown in Table 13, the cumulated humidity has been calculated relatively to the irrigated modality. All other modalities received approximately half the water quantity, and when exposed to multi-stresses, both plants treated with slurry prepared from the composition of the invention retained phenotypic features. | | | | | |

In conclusion, despite a lower supply of water, the plants that have been treated according to the formulation 1 or 2 of example 1 of the invention are able to preserve yields compared with an irrigated plant.

### 5. Evaluation of the slurry of the invention to improve the water use efficiency on soybean

The main objective was to investigate the ability of the slurry of formulation 1 of example 1 (suspo-emulsion) to improve the water use efficiency (WUE) on soybean grown on open field. The yield was estimated for a non-controlled modality and a modality treated with a slurry, both of them receiving the same amount of water (rainfalls and irrigation).

### 5.1. Equipment and methods

### 5.1.1. Description of the experimental setup

The description of the experimental setup is presented in Table 14.

**Table 14**

| | |
|---|---|
| **Crop (variety)** | Soybean (ES MENTOR) |
| **Sowing density** | 65 plants/m² |
| **Setup** | Randomized complete block design with 3 replicates |
| **Type of soil** | Sandy loam |
| **Harvest date** | 126 days after sowing |

### 5.1.2. Modalities considered.

The description of the modalities considered is presented in Table 15.

**Table 15**

| **Modality** | **Treatment** | **Application dose of the composition as per example 1** | **Application stage** |
|---|---|---|---|
| Control | Untreated Control (UC) | --- | --- |
| Treated | Formulation 1 according to the example 1 | 2 L/ha | BBCH 13 - Trifoliolate leaf on the 3^{rd} node unfolded |

The slurry is obtained by diluting the formulation 1 of example 1 (suspo-emulsion) in water and is applied only once, 14 days after sowing, by foliar spraying, at a volume of 2 L/ha.

### 5.1.3. Data collection method

The yield is measured at harvest on the two central rows by an experimental harvester with an on-board weighing system.

The climatic data over the entire crop cycle are obtained from the data observed by METEO FRANCE station located ca. 20 km away from the experiment field.

### 5.2. Results

### 5.2.1. Water management

Over the entire crop cycle, the amount of water supplied by rain and irrigation is 584.9 mm, including 315 mm by irrigation in 9 runs of 35 mm. figure 6 highlights the evolution with time of the available soil water (solid black line) along with the wilting point (dotted black line at 35 mm of available water), the day of product application (vertical dashed black line) and the different water supply periods: rainfalls (black histograms) and irrigation (grey histograms).

The reference evapotranspiration (ETo = ETP) and the real evapotranspiration (ETc adj = ETR) cumulated over the whole crop cycle are 680.4 and 460.5 mm for the control and the treated crops, respectively.

### 5.2.2. Production yield

The results of production yield (t/ha) of control and treated soybean per replicates are presented in Table 16.

**Table 16**

| Modality | Replicate 1 | Replicate 2 | Replicate 3 | Mean |
|---|---|---|---|---|
| Control modality | 3.017 | 3.435 | 3.156 | 3.203 |
| Treated modality | 3.568 | 3.598 | 4.395 | 3.854 |

### 5.3. Conclusion

The water balance established on the experiment shows that both modalities spent 23 days in drought stress after application of the product and 10 days in high-temperature stress (maximum daily temperature above 32 °C).

The average yields of the untreated control and the treated modality with the slurry of the composition of the invention were 3.203 and 3.854 t/ha respectively.

With a total crop water consumption by evapotranspiration of 460.5 mm, the water-use efficiencies (WUE) for the untreated control and the treated crop were 0.69 and 0.84 t/ha/100 mm, respectively.

Thus, in the trial, the yield and WUE gains with the use of the product are respectively 0.651 t/ha (+20%) and 0.15 t/ha/100 mm of water (+21.7%), showing therefore the benefit to apply the slurry of the composition of the invention on soybean to improve the production of biomass.

## Claims

1. A method for preserving yield while reducing the water used in anthropogenic irrigation of a field-cultivated crop exposed to at least one abiotic stress comprising the step of:
a) applying to the field-cultivated crop, at an early stage of its growth and prior to exposure of said cultivated crop to said abiotic stress, a composition comprising at least one phytosterol and at least one surfactant;
b) irrigating the field during the time the field-cultivated crop is exposed to said abiotic stress with a reduced amount of water compared to the amount of water used in a normal irrigation condition for an untreated crop.

2. The method according to claim 1, **characterized in that** the abiotic stress is a drought stress or a thermal stress.

3. The method according to claim 1 or 2, **characterized in that** the abiotic stress is a drought stress occurring without temperature conditions of a thermal stress.

4. The method according to claim 1 or 2, **characterized in that** the abiotic stress is a drought stress occurring with temperature conditions of a thermal stress.

5. The method according to any of claims 1 to 4, **characterized in that** the drought stress is preceded and/or followed by a thermal stress.

6. The method according to any of claims 1 to 5, **characterized in that** the amount of anthropogenically applied water is reduced by at least 20 %vol. compared to the amount of water used in a normal irrigation condition for an untreated crop.

7. The method according to any of claims 1 to 6, **characterized in that** the field-cultivated crop is selected in the group consisting in corn, soybean, millet, sunflower, spring wheat, winter wheat, spring barley, winter barley, rapeseed, cotton and sorghum.

8. The method according to any of claims 1 to 7, **characterized in that** said at least one phytosterol represents between 0.2% and 10% of the composition by weight, advantageously between 0.5% and 7%, and preferably between 1% and 5%.

9. The method according to any of claims 1 to 8, **characterized in that** the composition is in the form of an emulsion, said emulsion comprising lipophilic droplets containing the at least one phytosterols, said lipophilic droplets being dispersed in an aqueous phase, the composition further comprising at least one first surfactant (SF1) located at the interface of the lipophilic droplets and of the aqueous phase and selected from among the SFs that are soluble in the aqueous phase (WATER SF1) and the SFs that are soluble in the lipophilic droplets (OIL SF1).

10. The method according to any of claims 1 to 8, **characterized in that** the composition is in the form of a suspo-emulsion, said suspo-emulsion comprising lipophilic droplets containing the at least one phytosterol, said lipophilic droplets being dispersed in an aqueous phase, the composition further comprising only one surfactant (SF2) located at two different places respectively at the interface of the lipophilic droplets and of the aqueous phase and suspended in the aqueous phase under the form of particles insoluble in the aqueous phase.

11. The method according to any of claims 1 to 8, **characterized in that** the composition is in the form of a suspo-emulsion, said suspo-emulsion, comprising lipophilic droplets containing the at least one phytosterols, said lipophilic droplets being dispersed in an aqueous phase, the composition further comprising:
- at least one first surfactant (SF3) located at the interface of the lipophilic droplets and of the aqueous phase and selected from among the SFs that are soluble in the aqueous phase (WATER SF3) and the SFs that are soluble in the lipophilic droplets (OIL SF3); and
- at least one second surfactant (SF4) suspended in the aqueous phase, said second surfactant having the form of particles insoluble in the aqueous phase with SF3 different from SF4.

12. The method according to any of claims 1 to 11, **characterized in that** the at least one phytosterol is β-sitosterol, which represents at least 30% of the phytosterols by weight, with the balance to 100% containing, where appropriate, campesterol, stigmasterol and brassicasterol.

13. The method according to claim 11, **characterized in that** the surfactant (SF3) located at the interface of the lipophilic droplets and of the aqueous phase represents between 0.2% and 10% of the composition by weight, and the surfactant (SF4) suspended in the aqueous phase represents between 0.01% and 5% of the composition by weight.

14. The method according to any of claims 9 to 13, **characterized in that** the surfactant SF1, or SF2 or SF3 and SF4 are selected according to the desired solubility in lipophilic droplets or in water, from among the group comprising:
- anionic surfactants, advantageously anionic surfactants whose polar head group is a carboxylate, a sulfonate or a sulfated alcohol;
- cationic surfactants, advantageously cationic surfactants whose polar head group is an amine, a quaternary amine or a quaternary ammonium ester;
- amphoteric surfactants, advantageously betaine derivatives or phospholipids;
- neutral surfactants, advantageously ethoxylates, alkanolamines, alkylglucamides, polyol esters, alkyl monoglucosides or alkyl polyglucosides, polyol ethers, polyoxyethylene sorbitan esters (especially Tween 20, Tween 21, Tween 22, Tween 23, Tween 24, Tween 28, Tween 40, Tween 60, Tween 61, Tween 65, Tween 80, Tween L-0515, Tween L-1010, Tween L-1505), or sorbitan esters (especially Span 20, Span 40, Span 60, Span 65, Span 80, Span 83, Span 85, Span 120);
- natural surfactants, advantageously lecithins, preferably soy lecithin, or surfactants derived from amino acids; and
- surfactants synthesized from natural raw materials, advantageously polyol derivatives, preferably fatty acid sugar esters; the preferred fatty acid sugar esters are saccharose stearate, saccharose palmitate and their polyesters, or mixtures thereof.

15. The method according to any of claims 9 to 14, **characterized in that** SF1 or SF2 is sucrose stearate.
